# EUROPEAN PATENT SPECIFICATION

(11) **EP 4 527 344 B1**
(45) Date of publication and mention of the grant of the patent: **04.11.2026**
(21) Application number: 25150281.1
(22) Date of filing: 22.11.2019
(51) Int. Cl.: A61C 8/00

(54) **IMPLANT SYSTEM FOR IMPLANTATION INTO A ZYGOMATIC BONE**
IMPLANTATSYSTEM ZUR IMPLANTATION IN DAS JOCHBEIN
SYSTÈME D'IMPLANT DESTINÉ À ÊTRE IMPLANTÉ DANS UN OS ZYGOMATIQUE

(30) Priority: 23.11.2018 CH 14522018
(43) Date of publication of application: 26.03.2025
(62) Document number(s) of the earlier application(s) in accordance with Art. 76 EPC: 19809764.4 / 3 883 495
(73) Proprietor: Nobel Biocare Services AG, 8302 Kloten (CH)
(72) Inventor: Tschopp, Raquel, 5032 Aarau Rohr (CH); Weitzel, Jörg, 78239 Rielasingen-Worblingen (DE); Lovis, Yannick, 8152 Glattpark (CH); Carretta, Roberto, 6340 Baar (CH); Kaup, Thomas, 8910 Affoltern am Albis (CH); Malo Carvalho, Paulo, 1600 Lisboa (PT); Kamber, Simon, Bellikon (CH)
(74) Representative: Jensen, Olaf Sven

(56) References cited:
- BR-A2- 102013 031 730
- CN-A- 101 744 665
- CN-B- 103 054 653

## Description

### TECHNICAL FIELD

The present invention relates to a zygoma implant extension to be connected to an implant for implantation into a zygomatic bone and further to a multi-part zygoma implant for implantation into the zygomatic bone of a patient and for supporting a dental restoration. The present invention also relates to a handling tool and to a method for implanting an implant of a zygoma implant system as well as to a method for a partial implant system revision.

### BACKGROUND OF THE INVENTION

It has been proven as a successful strategy to restore or enhance the dental situation of a patient using an implant and a dental restoration in form of an artificial tooth or artificial teeth mounted thereto. The implant is implanted into the bone tissue of the upper or lower jaw bone and is either directly or after a healing period supplemented with a dental superstructure that serves to support the dental restoration in order to provide a patient with a desired functional and aesthetical dental treatment.

Although a patient can generally be provided with a desired solution based on this technique, there needs to be sufficient bone stock present in the patient's jaw bone to allow for the surgical intervention of implanting a dental implant. Otherwise, the dental implant may not be sufficiently anchored within the bone to support the superstructure and bears the risk of failure. In order to ensure enough bone stock, there are techniques available such as sinus lifting to enhance bone stock. However, increasing bone stock needs multiple interventions. This adds to the time required for treatment and requires additional healing time.

Another technique that has been developed by Brånemark is the application of zygoma implants (see for example WO 2010/003433 A1). This type of implant is anchored in the zygomatic bone and extends through the sinus into the maxilla of a patient, which then provides lateral support for the dental restoration in the mouth of this patient. The zygomatic bone is denser in quality and more cortical in nature than maxillary bone so that implantation can generally be done right away instead of above-noted extra chair time and wait in order to the increase bone volume.

Due to the location of the zygomatic bone, zygoma implants are significantly longer than conventional dental implants. This makes the surgical intervention and handling more challenging than the procedure performed for standard implants. Although the intervention turns out to be successful in nearly all cases and the zygoma implant is firmly anchored in the zygomatic bone, bone resorption and inflammation still occasionally occur. These cases often have their point of origin at the maxilla. Nonetheless, in order to stop the inflammation from spreading, the entire implant has to be removed. This revision is rendered difficult due to the integration of the implant in the zygomatic bone, which normally continues to take place without complications since it is away from the location of the inflammation. In addition, subsequent treatment may well be less optimal due to the revision of the implant and its effect on the bone tissue of the zygomatic bone and the maxilla.

Further, the technique by Brånemark often results in the zygoma implant extending through the sinus cavity, which may also cause infection or be infected. The path of the implant basically depends on the anatomy of the individual patient (see for example Aparicio et al., "Zygomatic implants: indications, techniques and outcomes, and the Zygomatic Success Code, Periodontology 2000, Vol. 66, 2014, 41-58).

BR102013031730A2 discloses an example of an extensible zygomatic implant.

### SUMMARY OF THE INVENTION

The invention is as defined in the appended claims.

Thus, it has been an objective to facilitate the installation and the revision of zygoma implants. Another objective has been to provide more prudent solutions for a revision that require less intervention if a problem such as an inflammation, fracture or misfit occurs. Further, it has been an objective to provide an implant that can easily be adapted to the individual needs of a patient in terms of its structure and shape.

In order to address these problems, an implant system for implantation into a zygomatic bone is provided. The implant system forms a dental substructure and comprises an apical system end and a coronal system end. The coronal system end includes a coronal superstructure interface along a superstructure interface axis for supporting a dental superstructure, wherein the implant system has a length in a range of 30 mm to 60 mm and includes at least two components.

Due to the total length of the implant system being within the afore-noted range, it can bridge the distance from the zygomatic bone to the ridge of the maxilla. This provides stable anchoring for a dental superstructure in order to restore a dental situation of a patient even if this patient has insufficient bone stock at the maxilla. In this respect, the length of the implant system is defined as the length from one end of the implant system to the other end of the implant system, wherein the end points are defined along the longitudinal or interface axes at the end of the implant system.

Further, the subdivision of the implant system that forms the dental substructure for supporting a dental superstructure allows in some embodiments for placement of this implant system one component after the other which facilitates handling of the implant system. It is also an advantage that the implant system can more easily be adapted to the individual needs when treating a patient.

Another advantage of a modular design of the zygomatic implant system becomes available in case of a problem at the implantation site such as an infection occurring at the level of the maxilla. These infections generally do at least not immediately affect the part of the zygomatic implant system that has been implanted into the zygomatic bone. If this is indeed the case, a dental professional can simply remove the component of the zygomatic implant system that extends into the maxilla in order to treat the infection. After treatment of the infection, the dental professional can either immediately or after a healing period reinstall the type of component that has previously been removed for treatment of the inflammation.

This advantage of the modularity of the zygomatic implant system also applies in cases, in which a problem occurs with a component of the implant system itself that makes it necessary to replace this component. Also, if a component turns out to not have the structural configuration such as length and orientation required in order to restore the dental situation as desired, a revision of the zygomatic implant system is facilitated since only the affected component of the system has to be replaced. Further, it is also possible that a part of the superstructure fails and cannot be removed. In all of these cases the zygomatic implant system allows the removal of only the component of the system that is affected rather than having to remove the entire implant.

In other words, the length of the implant system is adjustable by choosing components having a desired fixed length. Thus, each component has a fixed length that adds to the total length of the implant system so that the fixed total length of the implant system is basically the sum of the fixed lengths of the at least two components.

One of the components comprises a structure for anchoring the component within bone tissue (e. g. an outer thread). Preferably, this component is shorter in length than a second component.

Preferably, the component comprising the coronal system end is longer than the at least one other component of the implant system, i. e. a component that contributes to the total length of the implant system. This has the advantage that the distance between a component for anchoring within the zygomatic bone of a patient and the superstructure interface may at least be primarily bridged by this longer component. Such a configuration enhances the stability and strength of the implant system.

Further, each component of the implant system preferably has a length of at least 5 mm, at least 8 mm, at least 10 mm and most preferably at least 12 mm.

The angulation (orientation) between the components of the implant system may be adjusted by incorporating a straight or angular component, and/or by adjusting the rotational position of the components relative to each other about the rotational axis of at least one of these components (with or without indexing). By adjusting the rotational position, the angulation between components may be adjusted as seen in a plane extending along the longitudinal axis of one of these components. In this way, the angulation and length of the implant system may be adjusted independent of each other.

Due to the implant system comprising at least two components, the apical system end is part of a most apical component and the coronal system end is part of a most coronal component. The coronal superstructure interface at the coronal component allows for an attachment of a dental superstructure to the dental substructure established by the implant system. Although preferably, the coronal superstructure interface connects to the entire superstructure of a dental restoration, it may also connect to a further part of such a dental restoration's superstructure. In other words, a part integrally formed with the most coronal component may extend beyond the ridge of the maxilla into the oral cavity of a patient. Nonetheless, the major part of the length of the implant system's most coronal component is configured to be located beneath the maxilla's ridge, in particular, at least 60%, 70%, 80% or 90% of the length of the most coronal component of the implant system.

Further, the at least two components are preferably configured to be assembled via a screw such as an implant screw or an assembly screw. Accordingly, one of the components preferably comprises a threaded hole, wherein the other one of the components comprises a screw seat.

In an embodiment, the implant system comprises a first component with a longitudinal axis, wherein the first component is an implant for implantation into a zygomatic bone, forms the apical system end of the implant system, and includes a coronal implant interface along an implant interface axis.

It is particularly advantageous that one of the components serves as an implant for implantation into the zygomatic bone. This implant may be similar to a normal dental implant. In other words, at least 70%, 80%, or 90% of the implant's length is arranged in bone tissue in an implanted state. In case of a revision due to a problem that occurs on the side of the maxilla, the implant can simply remain implanted within the zygomatic bone. Otherwise and as described above, its removal requires a much more invasive approach and may also post challenges if a new implant is to be implanted after treatment of the condition that led to the revision.

A connection between the implant and the remaining part of the zygomatic implant system is established between the coronal implant interface of the implant and an apical implant interface of the remaining part of the zygomatic implant system. The coupling of these at least two components is performed by moving them generally along the implant interface axis towards each other. This movement can be accompanied by a rotational movement.

In another embodiment, the superstructure interface axis is inclined at an angle to the longitudinal axis of the first component.

This inclination at an angle to the longitudinal axis of the first component allows for a more flexible placement of the implant. More specifically, the inclination enables the dental professional to place the implant according to the situation of a patient such as the anatomical situation and access to the zygomatic bone, but still to be able to position the most coronal component of the implant system during insertion into the bone tissue at the intended location of the patient's maxilla.

The angle between the superstructure interface axis and the longitudinal axis of the first component basically defines the angulation of the zygomatic implant system. As described above, the angulation is adjusted by the choice of component and/or relative rotational position. More specifically, the angulation is determined by the choice of a straight or an angular second component (i. e. the angle of this component) and/or the relative orientation between the at least two components.

In yet another embodiment, the implant system further comprises a second component, wherein the second component is an implant extension for bridging the distance between a zygomatic bone and a maxilla of a patient, wherein the second component includes an elongated section with a longitudinal axis and an apical implant interface along the implant interface axis for an assembly to the first component, and wherein the second component forms the coronal superstructure interface of the implant system.

In this embodiment, the second component acting as an implant extension basically bridges the distance between the zygomatic bone and the maxilla of a patient mainly due its elongated section. In an assembled state, the apical implant interface at the apical end of the implant extension or elongated section is assembled to the first component, whereas the coronal superstructure interface supports and is assembled to an apical superstructure interface of a superstructure or at least a further part of the superstructure.

In one embodiment, the elongated section comprises a first part and a second part that are joined by a press-fit, a threaded connection and/or a weld.

This subdivision of the elongated section into a first part and a second part allows for a cost-effective production of second components with a variety of configurations such as lengths and angles. These various, preferably for treatment preassembled, elongated sections are then selected in view of a specific treatment of a patient. Assembly takes place by mounting the two parts to each other such as by a press fit or a threaded connection. In other words, any of the previously mentioned techniques can be used and preferably be combined to join the first and second parts during manufacturing. For example, the first part and the second part can be assembled to each other by a weld, in particular a laser weld. The weld may follow a preliminary assembly using a press-fit or a threaded connection for achieving a higher quality of the weld.

In another embodiment, the second component further comprises a through hole, wherein the through hole preferably extends along the longitudinal axis of the second component.

Such a through hole extending through the second component allows to fix the second component to an apical component, in particular the first component, using a screw such as an implant screw or an assembly screw. The through hole extending along the longitudinal axis of the second component further has the advantage that such a screw can be inserted and tightened by accessing the mouth of a patient.

In yet another embodiment, the superstructure interface axis is inclined at an angle and/or the implant interface axis is inclined at an angle in relation to the second component's longitudinal axis.

The superstructure interface axis being inclined at an angle to the longitudinal axis of the second component allows for an angular adjustment so that the superstructure interface axis has an orientation at the maxilla's ridge apt for the installation of a superstructure. If the implant interface axis is inclined at an angle in relation to the second component's longitudinal axis, the orientation of the elongated section is adjusted and with this adjustment also the orientation of the superstructure interface axis. In particular both inclinations in combination provide a high flexibility in adapting the zygomatic implant system to a patient.

In a preferred embodiment, the second component further comprises an apical intermediate interface along an intermediate interface axis, the apical intermediate interface preferably being located at the apical end of the elongated section, and an apical subcomponent, the apical subcomponent including a coronal intermediate interface for mounting the apical subcomponent to the apical intermediate interface and a through hole. The apical implant interface of the second component is formed at the apical end of the apical subcomponent. The intermediate interface axis of the subcomponent is parallel to or at an angle to the implant interface axis, wherein the angle is greater than 0°, preferably in a range of 5° to 35°, more preferably in a range of 10° to 20°, and most preferred in a range of 14° to 20°.

Such an apical subcomponent of the second component with the intermediate interface axis of its coronal intermediate interface being at an angle to the implant interface axis of its apical implant interface basically provides an inclination between the longitudinal axis of the elongated section and the longitudinal axis of the first component, i. e. the implant axis. With such a subcomponent, the dental professional has another tool for fine-tuning the zygomatic implant system to the specific anatomical situation of a patient.

Further, handling and assembling such a subcomponent by guiding it along the maxilla, preferably along a groove in the maxilla or through a hole created in the maxilla as an access to the zygomatic bone is easier than in the case of an integrally formed second component.

In a first step, the subcomponent is assembled to the first component by moving the subcomponent in the direction of the implant interface axis until the apical implant interface of the subcomponent gets in contact with the coronal implant interface of the first component. It may then be tightened using an implant screw. Preferably, the intermediate interface axis is running parallel to the second component's longitudinal axis.

Then, in a second step, the remainder of the second component is moved in the direction of the intermediate interface axis until the apical intermediate interface of the elongated section is in engagement with the coronal intermediate interface of the subcomponent. It may then be tightened using an assembly screw.

In one embodiment, the coronal intermediate interface of the apical subcomponent and the apical intermediate interface of the elongated section are configured to be in face-to-face contact or to be in contact by a conical connection. Either of these configurations can be supplemented with indexing.

These configurations for contact at the level of the intermediate interface may also or alternatively be used for the implant interface and/or the superstructure interface.

A face-to-face contact between two components has the advantage of allowing a predetermined amount of play along the plane of contact defined by these faces. This increases adaptability of the zygomatic implant system and facilitates assembly. Further, the face-to-face contact between the two components is more stable and provides for an optimal transfer of compressive forces in a direction perpendicular to the faces that for example occur during biting. Further, forces acting parallel to these faces are transferred by a screw for fixating the interfaces to each other and the friction force caused between the faces by the fixation force of the screw that presses the two faces against each other. Thus, the screw represents the weakest link in this direction and may break first in the event of failure, which does not have a significant effect on the outside of the implant system and allows for an easy revision.

An engagement by a conical connection is self-centering and allows for a transfer of forces along and perpendicular to the conical interface, i. e. in a longitudinal and a transverse direction of the conical interface. This type of interface contact particularly provides an effective conical seal between the components.

In another embodiment, the coronal intermediate interface of the apical subcomponent and the apical intermediate interface of the elongated section are fixed to each other by means of an assembly screw, a superstructure screw, or a thread of the apical intermediate interface of the elongated section.

Fixing the elongated section to the apical subcomponent by means of an assembly screw allows for an individual step-by-step assembly, in which the apical subcomponent is first mounted and fixed to the first component using an implant screw. Then, the elongated section is attached to the apical subcomponent and fixed with an assembly screw. Afterwards, a superstructure can be brought into engagement with the coronal superstructure interface of the second component and can be fastened using a separate superstructure screw.

A separate step-by-step assembly is also performed if the elongated section is fastened to the apical subcomponent using a thread of the elongated section's apical intermediate interface. In this case, the apical intermediate interface itself comprises a thread that engages a complementary thread of the coronal intermediate interface of the apical subcomponent. Again, the step-by-step assembly has the advantage that handling of each such structural and superstructure component takes place separately and is therefore easier to be performed.

Alternatively, the apical intermediate interface of the elongated section is brought into engagement with the coronal intermediate interface of the apical subcomponent and at least a further superstructure is placed on top of the coronal superstructure interface. Then both the elongated section and the superstructure are fastened using only an assembly screw instead of an assembly screw and a superstructure screw as in case of a separate step-by-step assembly. This has the advantage that only one screw is needed to fasten the elongated section and the subcomponent forming the second component, and the superstructure to each other.

In another embodiment, the apical implant interface of the second component comprises an implant screw hole for fixing the apical implant interface of the second component to the coronal implant interface of the first component with an implant screw, wherein the implant screw hole comprises a thread and/or a screw seat and is preferably a through hole.

More specifically, the implant screw is screwed into the screw hole of the coronal implant interface of the first component until the head of the implant screw contacts a screw seat of the second component so that the first component and the second component are pressed against each other while tightening the implant screw.

Further, if the implant screw hole of the second component comprises a thread, it is possible to preassemble the implant screw to the second component prior assembly to the first component. This facilitates handling of the implant screw since it cannot get accidentally lost during transport or in the mouth of a patient during treatment. Further, an incorrect assembly is avoided.

It should be noted that a screw hole in the context with this description is a hole into which a screw can be inserted. Depending on the function of the screw hole, it may include a thread and/or a screw seat.

In a preferred embodiment, the implant screw hole forms a portion of the through hole extending along the longitudinal axis of the second component. As a result, the head of the implant screw is accessible for a tool from the mouth of the patient, which facilitates assembly of the zygomatic implant system and integrates the means for assembly in a compact way. Also handling of the implant screw is facilitated.

In one embodiment, the apical subcomponent is integrally formed or includes a first part and a second part, the first part and the second part forming a portion within the through hole for capturing a head of an implant screw when being attached to each other, wherein the first part and the second part are preferably joined by a press-fit, a threaded connection and/or a weld, in particular a laser weld.

One difference of an integrally formed apical subcomponent in comparison to an apical subcomponent comprising two parts is the amount of preassembly that is done before the implant system is placed in a patient. More specifically, in case of an integrally formed apical subcomponent, the implant screw can be inserted with this subcomponent or after this subcomponent has been placed onto the first component. In contrast, an apical subcomponent comprising a first part and a second part in a pre-assembled state includes a portion within the through hole that captures the head of an implant screw. As a result, the apical subcomponent can only be placed onto the first component together with the implant screw. This facilitates handling and assembly of the apical subcomponent for the dental professional and basically eliminates the risk of the implant screw getting lost.

The first part and the second part of the apical subcomponent can be assembled with techniques that have already been described in relation to the embodiment of the second component comprising two parts.

In one embodiment, the apical implant interface of the second component and the coronal implant interface of the first component and/or the apical intermediate interface of the elongated section and the coronal intermediate interface of the apical subcomponent are configured as a threaded connection.

This embodiment has the advantage that there is no need for an implant screw or assembly screw. Instead, the second component is screwed to the first component and/or the elongated section is screwed to the apical subcomponent.

In a preferred embodiment, the second component is longer than the first component.

Since the first component is shorter than the second component, it is easier to implant the first component into the bone tissue of the zygomatic bone. More specifically, it is easier to handle and orient the implant of a patient before it enters the bone tissue of the zygomatic bone. This has the advantage that the orientation of the first component within the zygomatic bone may differ from the orientation of the groove along or access hole in the maxilla. This allows for improving the anchorage of the first component in the zygomatic bone due to an enhancement of the system's adaptability.

It should be noted that the length of each component as well as the overall length of the zygomatic implant system is to be understood as the length from one end to the opposite end. In other words, it is the linear distance from the most coronal end to the most apical end. The most apical end is defined as the most apical projected or intersecting point of the first component along the first longitudinal axis. The most coronal end is defined as the most coronal projected or intersecting point of the second component along the superstructure interface axis.

In another embodiment, the coronal superstructure interface comprises a superstructure screw hole including a thread for fixing a dental superstructure to the coronal superstructure interface.

In this embodiment, the dental superstructure is fixed to the dental substructure formed by the zygomatic implant system using a separate superstructure screw. It should be noted that the names of the screws correspond to the most apical component that they tighten. In other words, a superstructure screw is for fixing a superstructure to the zygomatic implant system. An assembly screw is for attaching the elongated section and the apical subcomponent to each other. It may also fixate a superstructure to the second component. An implant screw is for fixing the second component to the first component and may, in addition, also fasten a superstructure to the second component.

In a further embodiment, the superstructure screw hole is a separate screw hole, in particular a blind hole, or forms a portion of the through hole.

On the one hand, the superstructure through hole being configured as a blind hole has the advantage of effectively preventing any connection and ingress of substances between the side of the superstructure and the first component. On the other hand and as described above, designing the superstructure screw hole as a through hole facilitates handling of the zygomatic implant system due to an easy and compact access to the first component.

In one embodiment, at least the elongated section of the second component is straight and/or curved.

As previously mentioned, a straight elongated section, if resulting in a generally rotationally symmetric outer shape of this coronal part of the second component, allows to directly attach the elongated section to a subcomponent or the second component to the first component using a threaded connection, i.e. without the assistance of a dental screw. A straight elongated section also has the advantage of an easy insertion through a drilled hole in the maxilla or placement in a groove in the maxilla.

A curved elongated section of the second component on the other hand provides another parameter in order to adapt the zygomatic implant system to a specific anatomical situation of a patient.

In one embodiment, the coronal implant interface of the first component and the apical implant interface of the second component are configured as a ball joint, wherein the ball joint comprises a locking mechanism for locking the ball joint in a predetermined angular position.

Such a ball joint allows for a stepless or continuous adjustment of the angle between the first component and the longitudinal axis of the second component defined by the elongated section. It also facilitates placement of the second component since the apical portion of the second component may not be at a fixed angle. Instead, the angle between the first and second components may be adjusted during and after placement by a relative movement of the spherical joint surfaces of the coronal implant interface and the apical implant interface before the joint surfaces are fixed in relation to each other. After an adjustment of the first component's coronal implant interface in relation to the second component's apical implant interface, the locking mechanism fixes the two components in relation to each other. Thus, the locking mechanism locks the structure or angular configuration of the implant system.

In a preferred embodiment, the locking mechanism is configured to lock a pair of joint surfaces of the ball joint by a friction force in the ball joint.

Applying friction force between the pair of joint surfaces may be achieved by tightening an implant screw, which provides a reliable and releasable fixation method after having set the desired angularity between the first component and the second component.

In one embodiment, the second component comprises the apical implant interface and forks to at least two, in particular two, coronal superstructure interfaces.

In this embodiment, one implant can serve as a support for multiple dental restorations and in particular for one dental restoration that bridges several teeth. The branching of the second component can be provided at the level of the elongated section as an integral branching point. Also, a fork subcomponent may be attached to or slid over the elongated section. Alternatively or additionally, an apical subcomponent in form of a fork subcomponent may also be mounted to the apical intermediate interface of an elongated section. Any interface of these fork subcomponents may be provided with a fixed interface axis and/or as a ball joint. Preferably, the apical subcomponent with a branching point or the fork subcomponent may be provided as a custom solution using 3D-printing.

In one embodiment, the coronal superstructure interface is arranged at the coronal end of an integrally formed abutment section for attaching a further dental superstructure, in particular a dental restoration.

As described above, the zygomatic implant system provides the dental substructure for supporting a dental superstructure. In this embodiment, the integrally formed superstructure provides the functionality of an abutment section to which further parts of a dental superstructure, in particular a dental restoration, may be attached. Nonetheless, the major part of the second component is preferably configured to be placed behind the ridge of the maxilla as seen from the mouth of a patient. Otherwise, it would form part of a superstructure in context of this description.

It is further provided a set of an implant system as described in any of the embodiments above and a dental superstructure, in particular an angulated abutment, a bridge, an implant bar and/or a dental restoration.

This hands an integral solution to a dental professional for treating a patient in order to provide the desired functionality and support for a visible dental restoration that is to be installed.

It is further provided a zygoma implant extension as a second component for an implant system according to any one of previously described embodiments. The zygoma implant extension comprises an elongated section with a longitudinal axis; an apical interface with an implant interface axis for establishing a connection between an implant for implantation into a zygomatic bone and the zygoma implant extension; a coronal superstructure interface with a superstructure interface axis for supporting a dental superstructure, wherein the coronal superstructure interface supports the dental superstructure at an angle between 25° to 65° and preferably 40° to 65° relative to the implant interface axis (i. e. in a plane defined by the implant interface axis and the superstructure interface axis).

In one embodiment, the zygoma implant extension has a length from its coronal end to its apical end between 10 mm to 45 mm, preferably 12 mm to 45 mm, more preferably 15 mm to 43 mm, and most preferably 18 mm to 43 mm.

These length ranges of a zygoma implant extension put the dental professional into a position to provide treatment with a zygomatic implant system for substantially any anatomical situation.

Further, a handling tool for installing a subcomponent on an implant for implantation into a zygomatic bone by means of an implant screw is provided, in particular a subcomponent of the implant system of any one of the previously described embodiments. The handling tool comprises a guide sleeve for insertion of a screw driver with a screw interface at its apical end for engaging the screw. The guide sleeve further comprises markings for determining the length of an extension element.

The guide sleeve of the handling tool preferably comprises means to engage a subcomponent of the zygomatic implant system, such as threads, a snap feature, or a press-fit feature, in order to place the subcomponent onto a first component that has been implanted into the zygomatic bone. More specifically, the engagement means of the guide sleeve is configured to retain the subcomponent during installation. This facilitates placement of the subcomponent along the maxilla, preferably in a groove, or through an access hole, placement of the subcomponent onto the first component, and subsequently holding the subcomponent in place during fastening of the subcomponent to the first component. During the last step, a screwdriver can be inserted into this sleeve with the guide sleeve in place in order to fasten the subcomponent of the second component to the first component by means of an implant screw. By doing so, the guide sleeve protects the surrounding tissue against the rotational movement of the screwdriver.

Further, the markings on the guide sleeve provide an easy and effective means to the dental professional for selecting an appropriate length of the remaining part of the second component including the elongated section that is to be mounted to the apical subcomponent. The remaining part basically comprises the apical intermediate interface, the elongated section, and the coronal superstructure interface.

In view of above-noted objectives, it is also provided a method for implanting an implant of a zygoma implant system, wherein the zygoma implant system comprises at least two components that are particularly part of an implant system as described above. The method comprises the steps of preparing the maxilla and zygomatic bone of a patient for placement of the components of the zygoma implant system; inserting an implant as a first component into the zygomatic bone; attaching a second component to the implant, in particular using the handling tool described above, wherein the second component bridges the distance from the implant inserted into the zygomatic bone to the ridge of the maxilla, and attaching a dental superstructure to the second component.

This method of implanting an implant facilitates the handling and the implantation process due to the subdivision into at least two components. Also, screwing in the implant may be performed with a screwdriver that at the level of the maxilla is preferably received in a sleeve. This prevents the rotational movement of the screwdriver affecting any surrounding tissue.

Further, a method for a partial zygoma implant system revision is provided that comprises the steps of removing a superstructure to gain access to a zygoma implant system according to any one of the previously described embodiments. After removal of the superstructure a second component of the implant system serving as an implant extension is removed through the maxilla of a patient while leaving a first component being an implant implanted into a zygomatic bone in place. The treatment ends with placing a new second component on the implant.

Accordingly, the above-described implant system allows for a less invasive revision in cases in which the implant is not affected than techniques known from the prior art. Bone tissue of the zygomatic bone is preserved and the bone tissue of the maxilla may be treated. Also for other reasons such as failure of a part of the implant system at least this part of the second component may be exchanged without having to manipulate the implant.

In one embodiment, the method further comprises the step of treating an inflammation after the step of removing the implant extension, preferably including a temporary closure of the access to the implant during treatment.

This embodiment allows treatment of the inflamed site even over a longer period but will still finish with the desired dental restoration in place. In the intermediate time, a healing abutment may be placed on the implant or at the coronal superstructure interface of the second component.

### SHORT DESCRIPTION OF THE DRAWINGS

The following figures illustrate preferred embodiments of the present invention. In these figures, same reference signs refer to features throughout the drawings that have the same or an equivalent function and/or structure. It is to be noted that a repetitive description of these features may be omitted. In the accompanying figures:
Figure 1 shows a three-dimensional side view of multi-component implant system according to a first embodiment that comprises an implant as a first component and an implant extension including an angled superstructure interface as a second component;
Figure 2 illustrates a cross-sectional view of a second embodiment of a multi-component implant system that is similar to the implant system of figure 1, with a part of a superstructure in form of an abutment installed thereon;
Figure 3 illustrates a cross-section of a multi-component zygoma implant system according to a third embodiment with an angularity between the implant and the superstructure interface;
Figure 4 shows a three-dimensional side view of a multi-component zygoma implant system with an angled superstructure interface and an angled apical subcomponent forming the apical end of the implant extension or second component according to a fourth embodiment;
Figure 5 is a cross-sectional view of a multi-component zygoma implant system according to a fifth embodiment with a different angular configuration than the fourth embodiment and an abutment mounted to its superstructure interface;
Figure 6 is a cross-sectional view of a multi-component zygoma implant system according to a sixth embodiment;
Figure 7 is a cross-sectional view illustrating a seventh embodiment with another interface configuration at the level of the subcomponent than the sixth embodiment;
Figure 8 illustrates yet another interface configuration of a subcomponent in cross-section according to an eighth embodiment of a multi-component zygoma implant system;
Figure 9 shows a cross-sectional view of a multi-component zygoma implant system according to a ninth embodiment with an alternative interface structure of the subcomponent between the elongated section of an implant extension and an implant;
Figure 10 is a cross-sectional view showing an integral two-part implant extension with yet another interface configuration for the subcomponent according to a tenth embodiment of a multi-component zygoma implant system;
Figure 11 shows an eleventh embodiment of a multi-component zygoma implant system with another integrally formed two-part implant extension and an integrally formed abutment that allows for a direct placement of a dental restoration;
Figure 12 is a cross-sectional illustration of a twelfth embodiment of a multi-component zygoma implant system using a superstructure screw for the assembly of an elongated section, a subcomponent, and an abutment;
Figure 13 is an illustration along the length of a multi-component zygoma implant system with an integrally formed abutment section according to a thirteenth embodiment;
Figure 14 shows a cross-section of a multi-component zygoma implant system of a fourteenth embodiment;
Figure 15 illustrates a cross-section along a multi-component zygoma implant system according to a fifteenth embodiment with an implant interface formed as a ball joint;
Figure 16 is a cross-sectional view of a multi-component zygoma implant system with a ball joint implant interface according to a sixteenth embodiment;
Figure 17 is a cross-sectional view of a multi-component zygoma implant system in accordance with a seventeenth embodiment comprising yet another arrangement of a ball joint implant interface;
Figure 18 is a three-dimensional view of an eighteenth embodiment of a multi-component zygoma implant system, which has a fork configuration;
Figure 19 is a three-dimensional illustration of another fork configuration for a multi-component zygoma implant system according to a nineteenth embodiment;
Figure 20 is a three-dimensional view of a third example of a multi-component zygoma implant system having a fork configuration for the attachment of a superstructure to support a dental restoration that replaces more than one tooth;
Figure 21 shows a first step of an assembly of an exemplary multi-component zygoma implant system in a cross-¬sectional view, in which an apical subcomponent is assembled to an implant;
Figure 22 shows a cross-sectional view of a second step in a procedure of assembling the multi-component zygoma implant system of figure 21, in which an elongated section is assembled to the apical subcomponent; and
Figure 23 is a cross-sectional view of a third step in the procedure of assembling the multi-component zygoma implant system of figures 21 and 22, in which a superstructure in form of an abutment is attached to the multi-component zygoma implant system.
Figure 24 is a cross-sectional detailed view of an interface configuration of a first component and a second component's subcomponent of a multi-component zygoma implant system.
Figure 25 is a cross-sectional detailed view of another interface configuration of a first component and a second component of a multi-component zygoma implant system.

### DETAILED DESCRIPTION OF PREFERRED EMBODIMENTS

In the following, multiple preferred embodiments and modifications are described under reference to the attached figures. These exemplary embodiments serve for a better understanding of the invention and are not intended to limit the scope of protection as defined by the appended claims.

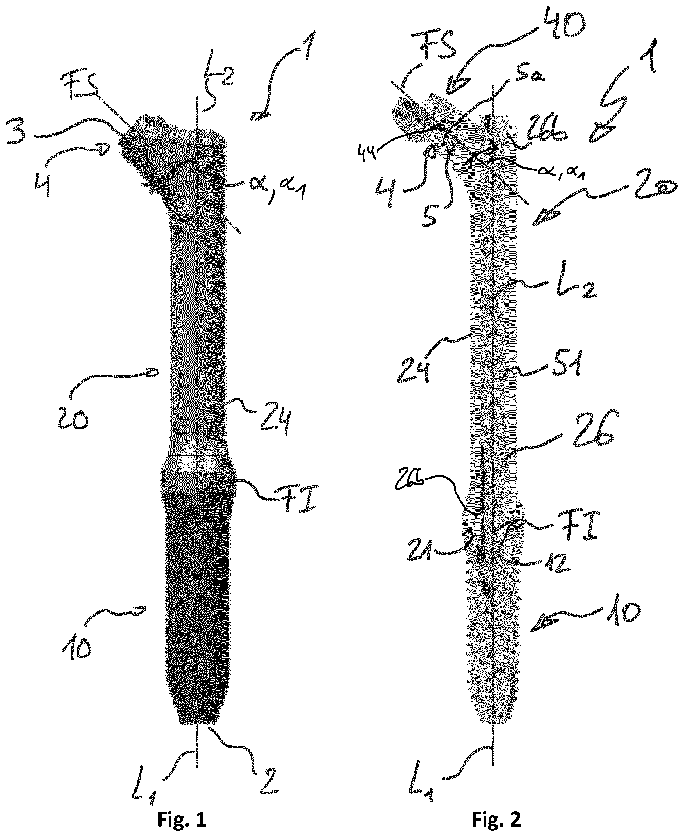

Figure 1 illustrates a first embodiment of a multi¬component zygomatic implant system 1 that forms a dental substructure for supporting a dental superstructure in order to restore or treat a dental situation of a patient. The implant system 1 comprises a first component 10 and a second component 20. At the coronal system end 3, the implant system 1 comprises a coronal superstructure interface 4. The superstructure interface 4 is arranged along a superstructure interface axis FS. The apical end of the first component 10 forms the apical system end 2. This apical system end is the leading end during implantation of the first component 10 and is configured to be arranged within the bone tissue.

The first component 10 is an implant for implantation into the zygomatic bone of a patient. The implant has a longitudinal axis L₁ and comprises at least one external outer thread (cf. figure 2) that enables the first component 10 to be screwed into the zygomatic bone. Preferably the implant is screwed into a hole within the zygomatic bone that has been previously prepared for this purpose.

The first component 10 and the second component 20 are coupled by a coronal implant interface 12 at the coronal end of the first component 10 and an apical implant interface 21 at the apical end of the second component 20. The implant interfaces are formed along a straight implant axis FI that is preferably parallel to the longitudinal axis L₁ of the first dental component 10.

The second component 20 comprises coronally of its apical implant interface 21 an elongated section 24. The elongated section 24 is formed as an elongated body having a longitudinal axis L₂. In the exemplary embodiment of figure 1, the superstructure interface axis FS is inclined at an angle α₁ in relation to the longitudinal axis L₂ of the elongated section 24. Further, the implant interface axis FI is parallel to the longitudinal axis L₂. Consequently, the angle α₁ represents the angle α between the superstructure interface axis FS and the implant axis L₁. As will be described below in relation to further embodiments, the implant interface axis FI may also be configured at an angle α₂ in relation to the longitudinal axis L₂. Likewise, the superstructure interface axis FS may also be parallel to the longitudinal axis L₂.

Turning to figure 2, a cross-section of another embodiment of a zygomatic implant system 1 is shown that differs from the embodiment of figure 1 in that an implant screw 51 is shown that extends above the coronal end of the elongated section 24. Further, an abutment 40 is assembled to the second component 20 by bringing an apical superstructure interface 44 of the abutment 40 into engagement with the coronal superstructure interface 4 of the zygomatic implant system 1. In particular, the apical superstructure interface 44 of the abutment 40 comprises threads that engage a coronal superstructure interface 4 of the zygomatic implant system 1. In particular, the apical superstructure interface 44 of the abutment 40 comprises threads that engage a superstructure thread 5a formed within a superstructure screw hole 5 of the coronal superstructure interface 4.

The first component 10 comprises a coronal implant interface 12 that is in engagement with a corresponding apical implant interface 21 of the second component 20. As illustrated in figure 2, both implant interfaces extend along the implant interface axis FI.

The second component 20 of the embodiment shown in figure 2 further comprises an implant screw hole 26 that is formed as a through hole and extends along the longitudinal axis L2 through the second component 20. At the coronal end of the implant screw hole 26 is a screw seat 26b. The head of an implant screw 51 rests on this screw seat 26b when the implant screw 51 is brought into threaded engagement with a thread of the coronal implant interface 12 of the first component 10 and is tightened in order to fixedly mount the first component 10 via the implant interfaces 12, 21 to the second component 20. Further, the implant screw hole may also comprise a thread 26b for capturing the implant screw 51 prior assembly. This prevents the implant screw 51 from getting lost and may ensure that the proper implant screw 51 is used.

The implant interface in figure 2 has a face-to-face configuration, i.e. in an assembled state, a face of the apical implant interface 21 is in contact with the coronal implant interface 12. The faces of the apical implant interface 21 and the coronal implant interface 12 are lying in a plane that is at an angle in relation to the longitudinal axes L₁ and L₂. Preferably, this angle is substantially 90°. As described above, the face-to-face configuration initially allows for a predetermined amount of play along the plane which assists in adjusting the structure of the zygomatic implant system 1 during assembly in the mouth of a patient.

The apical implant interface 21 further comprises a conical protrusion at the apical end of the apical implant interface 21 that extends in an apical direction and is inserted into a hole of the coronal implant interface 12 of the first component 10. The hole of the coronal implant interface 12 for receiving the conical protrusion is less conical than the protrusion of the apical implant interface 21. As a result, these features of the implant interfaces 12, 21 primarily assist by providing guidance for an engagement. At the tip of the conical protrusion is the exit of the through hole 23 or implant screw hole 26.

Like in the previous embodiment, the superstructure interface axis FS is arranged at an angle α₁ in relation to the longitudinal axis L₂. Since the longitudinal axis L₂ and the longitudinal axis L₁ are parallel to each other, this angle α₁ represents the angularity α of the implant system 1.

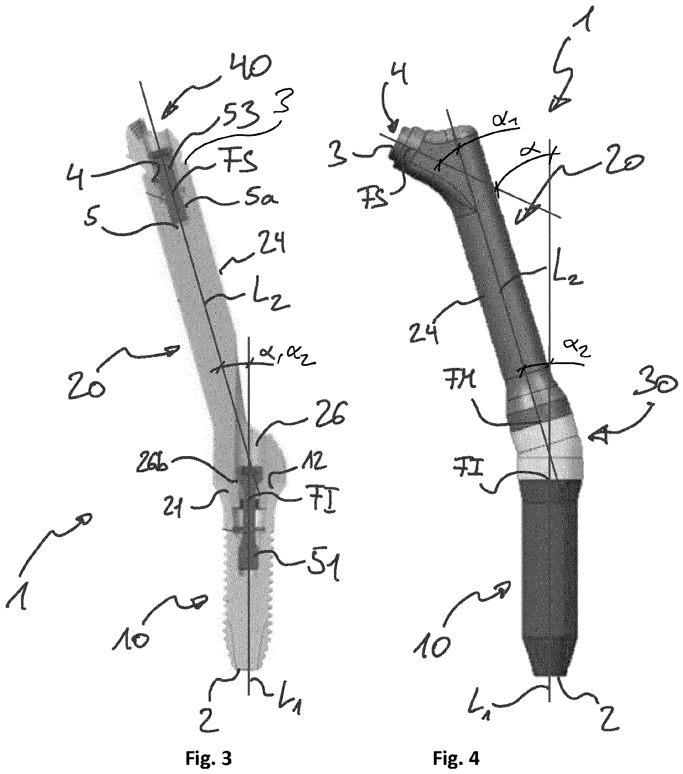

Figure 3 shows yet another embodiment of a zygomatic implant system 1. This embodiment also forms a dental substructure for supporting a dental restoration. Accordingly, figure 3 illustrates an abutment 40 of a dental superstructure. Similar to the embodiment shown in figure 2, the abutment 40 is attached to the coronal superstructure interface 4 at the coronal system end 3 of the implant system 1. However, in contrast to the previous embodiment, the abutment 40 is mounted to the coronal superstructure interface by means of a superstructure screw 53 that is brought into threaded engagement with the superstructure thread 5a of the superstructure screw hole 5. Like in figure 2, the superstructure screw hole 5 is formed as a blind hole. This prevents any substances entering at the coronal side from passing through the second component 20. Although the abutment is shown as an angled abutment 40, the skilled person will appreciate that alternatively a straight abutment may be mounted to the superstructure interface 4.

Further, the superstructure interface axis FS is parallel to the longitudinal axis L₂ of the elongated section 24. In other words, the angle α₁ is 0° (cf. figures 1 and 2). In contrast to the embodiments of figures 1 and 2, the longitudinal axis L₂ is inclined at an angle α₂ in relation to the implant interface axis FI and the longitudinal axis L₁, wherein the latter two are parallel to each other. Thus, the angularity α of the implant system 1 is defined by this inclination between the longitudinal axis L₂ and the implant interface axis FI.

The second component 20 further comprises an implant screw hole that is formed as a through hole 23 which extends along the implant interface axis FI. It does not extend along the longitudinal axis L₂. As a result, the implant screw 51 is shorter than the implant screw of the second embodiment since it does not extend along the elongated section 24. Also, there is no connection through the second component 20 between the superstructure screw hole 5 and the implant screw hole 26. The implant interfaces 12 and 21 of the third embodiment are in contact by means of a face-to-face configuration.

As will be described in more detail further down below, the zygoma implant system 1 of all embodiments allows for a placement rather along the sinus cavity instead of through the sinus cavity due to its multi-component configuration. More specifically, the multi-component configuration allows for an adjustment of the angularity of the substructure established by the implant system 1. For example, the angularity of the second component 20 illustrated in figure 2 may be chosen so that the distance between the first component implanted into the zygomatic bone and the maxilla's ridge may be bridged without severing the mucous membrane of the sinus cavity. Depending on the anatomy of a patient, it may even be possible to provide a bone tissue barrier between the sinus cavity and the implant system 1.

Figure 4 illustrates a fourth embodiment. In this embodiment, the first component 10 basically corresponds to the first component of the embodiment of figure 1. The second component 20 basically corresponds to the second component of the first embodiment illustrated in figure 1. Nonetheless, in contrast to the first embodiment, the first component 10 and the second component 20 are not directly connected to each other but instead via an apical subcomponent 30 that forms the apical portion of the second component 20.

The apical subcomponent 30 is mounted to the elongated section 24 by means of an intermediate interface along an intermediate interface axis FM. At the apical end, the subcomponent 30 comprises the apical implant interface 21 of the second component 20 formed along the implant interface axis FI. In this exemplary embodiment, the intermediate interface axis FM that is parallel to the longitudinal axis L₂ and the implant interface axis FI that is parallel to the longitudinal axis L₁ are inclined in relation to each other by an angle α₂. This angle α₂ and the angle α₁ between the superstructure interface axis FS and the longitudinal axis L₂ together define the angularity of the multi-component zygomatic implant system 1, i.e. the angle α between the superstructure interface axis FS and the longitudinal axis L₁.

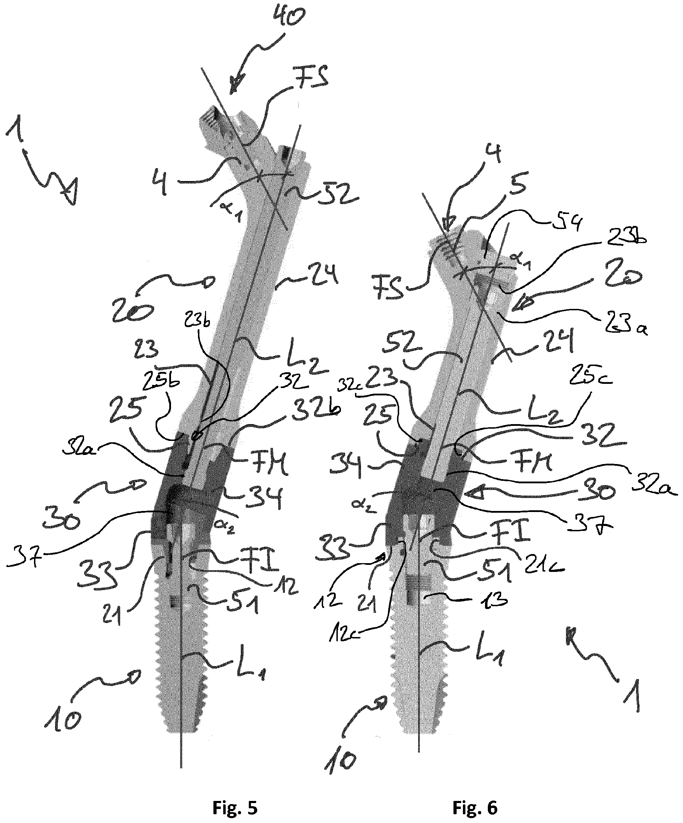

In figure 5, another embodiment of the apical subcomponent 30 is shown in more detail. In this exemplary embodiment, the part of the second component 20 comprising the elongated section 24 is configured similar to the one of the second component 20 of the second embodiment shown in figure 2. The apical subcomponent 30 illustrated in figure 5 comprises a coronal intermediate interface 32 for assembly to the elongated section 24 and an apical implant interface 21 for assembly to the coronal implant interface 12 of the first component 10. In this exemplary embodiment, the intermediate interfaces 25, 32 and the implant interfaces 12, 21 are both configured for a face-to-face contact.

The apical subcomponent 30 of the fifth embodiment comprises a first part 33 and a second part 34. The first part 33 and the second part 34 are preassembled using a threaded connection, a press-fit, a snap fit, a weld, in particular a laser weld, or a combination thereof. For example, the first part 33 and the second part 34 may initially be assembled using a threaded connection, a press-fit or a snap fit for a preliminary fixation. This preliminary fixation facilitates welding in order to integrally join the first and second parts 33, 34. The first part 33 and the second part 34 are inclined in relation to each other so that the implant interface axis FI of the apical implant interface 21 is arranged at an angle α₂ to the intermediate interface axis FM of the coronal intermediate interface 32 at the coronal end of the apical subcomponent 30.

Like in the previous embodiment, the angles α₁ and α₂ define together the angle α of the zygomatic implant system 1. In difference to the embodiment of figure 4, the angles α₁ and α₂ incline their respective components towards opposite directions so that the system angle α is smaller than the sum of the absolute values of these two angles.

The system angle α between the superstructure interface axis FS and the longitudinal axis L₁ of the implant in a plane defined by these two axes is preferably in a range of 25-65°.

In an assembled state, the apical intermediate interface 25 of the second component 20 engages the coronal intermediate interface 32 of the apical subcomponent 30 and an assembly screw 52 extending through the elongated section 24 engages a thread 32a of the coronal intermediate interface 32 in order to fasten the two components 20 and 30 to each other.

Similar to the implant screw hole 26 of figure 2, the through hole 23 of the elongated section 24 may further comprise a thread 23b for capturing the assembly screw 52 prior assembly.

In a joined state of the first part 33 and the second part 34, the first part 33 and the second part 34 form a through hole 37 with a portion that is dimensioned to capture the head of the implant screw 51. During assembly, the implant screw 51 is inserted into the part of the through hole 37 formed by the first part 33 of the apical subcomponent 30. Then the second part 34 is joined with the first part 33 as described above. As a result, the implant screw 51 is captured on the side of the first part 33 by a screw seat and on the side of the second part 34 by the threaded hole 32a having a smaller diameter than the diameter of the head of the implant screw 51. Although captured, the implant screw 51 is not fixed along the implant interface axis FI to allow for a rotation of the implant screw 51 that fastens the subcomponent 30 to the first component 10.

The next exemplary embodiment illustrated in figure 6 is similar to the embodiment of a zygomatic implant system 1 illustrated in figure 5. However, in comparison to the embodiment of figure 5, the zygomatic implant system 1 of figure 6 further comprises a cover 54 that covers the through hole 23 at the coronal end of the second component 20. For this reason, the through hole 23 includes coronally of the screw seat 23a a thread 23b for a threaded connection with the cover 54. In the exemplary embodiment, the cover 54 is a cover screw but may also be a sealing plug, lid, etc., preferably without the need for a thread 23b. The cover 54 prevents ingress of any substances that may contaminate the inside of the zygomatic implant system 1 defined by the through hole of the second component 20 formed by the through hole 23 of the elongated section 24 and the through hole 37 of the apical subcomponent 30 as well as the blind hole 13 of the first component 10.

The intermediate interfaces 25, 32 and the implant interfaces 12, 21 are configured for a face-to-face contact and further may include indexing for preventing any unintended relative rotation between the components 10, 20, and 30 of the implant system 1. The skilled person will appreciate that it is also possible to only provide indexing to one or none of these interfaces (cf. embodiment of figure 5). Further, an interface configured for face-to-face contact allows for a more compact design in comparison to a conical interface.

For indexing, the coronal intermediate interface 32 of the apical subcomponent 30 comprises coronal indexing means 32c for engaging apical indexing means 25c of the apical intermediate interface 25. The indexing means 25c, 32c have corresponding non-rotationally symmetric cross-sections perpendicular to the longitudinal axis L₂ in order to prevent a relative rotation between components. Similarly, the apical implant interface 21 of the second component 20 comprises indexing means 21c for engaging indexing means 12c of the coronal implant interface 12 of the first component 10.

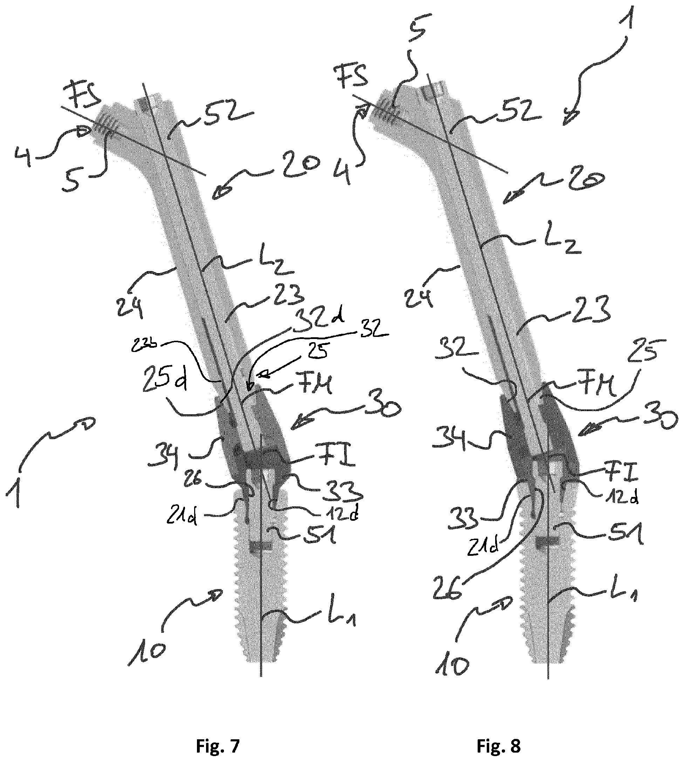

Turning to the next exemplary embodiment illustrated in figure 7, this embodiment particularly differs from the previous embodiments at the intermediate interface 25, 32 and the implant interface 12, 21. More specifically, the apical intermediate interface 25 of the elongated section 24 comprises a male apical conical portion 25d that engages a complementary female coronal conical portion 32d of the coronal intermediate interface 32. Thus, the connection between the elongated section 24 and the subcomponent 30 is established by the conical surface of the apical conical portion 25d and the conical surface of the coronal conical portion 32d.

Preferably, the conical angle of the intermediate interface's conical shape is chosen so that the established connection is not self-locking in order to allow for an easy disassembly of the second component 20 in case this part of the second component, i.e. the elongated section 24 and the coronal system interface 4, has to at least temporarily be removed or be replaced.

Nonetheless, it is also possible to provide a self-locking conical connection in order to connect the elongated section 24 more tightly to the apical subcomponent 30. In both cases the subcomponent 30 of the second component 20 is assembled using an assembly screw 52.

The conical contact within the intermediate interfaces 25, 32 provides on the one hand guidance during assembly and on the other hand fixation in the direction of the longitudinal axis L₂ at least in case of compression and the direction perpendicular to the longitudinal axis L₂. Further, a conical connection forms an effective seal between the two components.

As illustrated in the exemplary embodiment of figure 7, the configuration of the contact between the implant interfaces 12, 21 is also conical. Similar to the intermediate interface, the coronal implant interface 12 comprises a conical portion 12d formed as conical recess and the apical implant interface 21 of the second component comprises a conical portion 21d formed as a conical protrusion that establish a conical connection between the apical subcomponent 30 and the first component 10.

The skilled person will appreciate that the implant interface may be configured like the intermediate interface or may differ. For example, one of the implant interfaces 12, 21 and the intermediate interfaces 25, 32 may have a face-to-face configuration whereas the other one may be configured as a conical connection. Further, either or both of the implant interfaces or the intermediate interfaces may include indexing.

As illustrated in the eighth exemplary embodiment of figure 8, the intermediate interfaces 25, 32 may be configured for a connection established by a conical contact, whereas the implant interfaces 12, 21 is provided with a configuration that establishes a face-to-face contact. Although the apical implant interface 21 includes a conical portion 21d formed as a protrusion, this conical portion 21d in combination with the conical portion 12d formed as a recess are configured so that they do not engage when being assembled. This may be achieved by using a different cone angle and/or a different size of the conical shape in order to allow for play along the plane defined by the face-to-face configuration of the implant interfaces 12, 21. In this configuration, the conical part of the implant interface serves for guiding the apical implant interface 21 into engagement with the coronal implant interface 12. The skilled person will appreciate that the arrangement of the conical recess and conical protrusion may be swapped or reversed for any of the described embodiments.

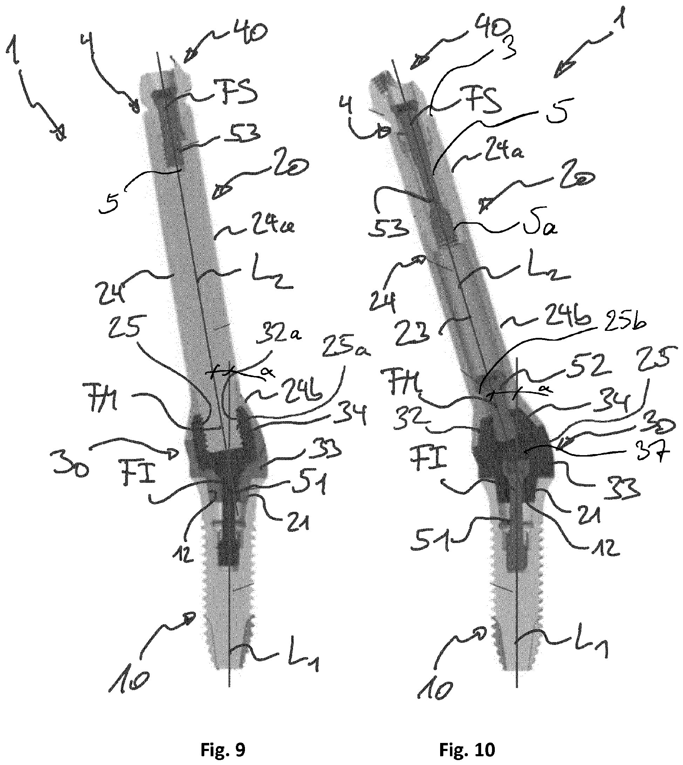

Yet another type of interface is shown as part of the ninth embodiment illustrated in figure 9. In this embodiment, the intermediate interface 25, 32 has a threaded configuration. More specifically, the apical intermediate interface 25 of the elongated section 24 comprises a thread 25a that engages a corresponding thread 32a of the apical intermediate interface 32. During assembly, the elongated section 24 is screwed to the apical subcomponent 30 establishing a tight and releasable connection between these two components. As described above, this configuration prevents the ingress of any substances into the interior of the second component 20 since the second component 20 does not comprise a through hole 23. Instead, the coronal superstructure interface 4 of the ninth embodiment is configured with a superstructure screw hole 5 that is formed as a blind hole. Another advantage is the increased strength of the elongated section 24 due to its solid configuration.

The implant interface of the ninth embodiment has a face-to-face configuration with a conical guidance portion as described above in relation to the eighth embodiment. As illustrated in figure 9, the elongated section 24 may comprise a first part 24a and a second part 24b. The second part 24b is joined to the first part 24a at the apical end of the elongated section 24 by any of the techniques already described above.

In contrast to the ninth embodiment, the tenth embodiment illustrated in figure 10 comprises a through hole 23 that extends along the longitudinal axis L₂. A coronal portion of the through hole 23 is formed within a first part 24a of the elongated section 24, a middle portion of the through hole 23 is formed by a second part 24b of the elongated section 24, and an apical portion of the through hole is formed by the through hole 37 of the apical subcomponent 30.

The coronal portion of the through hole may, as illustrated in figure 10, form a superstructure screw hole 5 with a superstructure thread 5a in order to fasten a dental superstructure such as the abutment 40. In this exemplary embodiment, the abutment 40 is fastened to the zygomatic implant system 1 or more specifically the coronal superstructure interface 4 at the coronal system end 3 of the first part 24a by using a superstructure screw 53. The first part 24a and the second part 24b of the elongated section may be joined by any of the afore-described techniques. The part 24b preferably has a standard length that is extended by part 24a in order to match the needs of an individual patient. In other words, this design may be used to adapt the length of the implant system 1 to a patient.

Further, the through hole 23 comprises at the apical intermediate interface 25 a screw seat 25b for an assembly screw 52 that fastens the elongated section 24 to the apical subcomponent 30. The through hole 23 continues as through hole 37 that extends in an apical-coronal direction through the apical subcomponent 30. The second component 20 at the apical subcomponent 30 and the first component 10 are assembled at the implant interface using an implant screw 51 that is captured within a portion of the through hole 37 of the apical subcomponent 30.

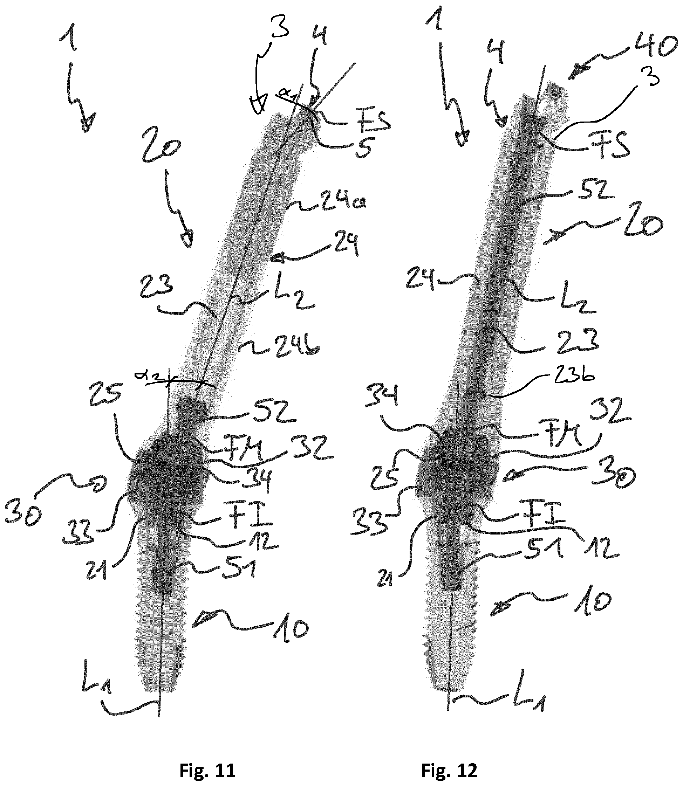

The eleventh embodiment illustrated in figure 11 differs from the previously described tenth embodiment particularly in the configuration of the coronal superstructure interface 4 at the coronal system end 3 of the implant system 1. More specifically, the coronal superstructure interface 4 comprises a superstructure interface axis FS at an angle α₁ in relation to the longitudinal axis L₂ of the elongated section 24. Further, the coronal superstructure interface 4 is integrally formed with the elongated section 24 so that it functions as an abutment for mounting and supporting further parts of a dental superstructure in order to install a dental restoration within the mouth of the patient. In case of an abutment being integrally formed at the coronal system end 3 of the zygomatic implant system 1, the major part of the most coronal component's length is still configured to lie beneath the level of the ridge of a patient's maxilla. In particular, at least 60%, 70%, 80% or 90% of the length of the second component 20 is part of the substructure.

Nonetheless, preferably an entire superstructure is mounted to the zygomatic implant system 1 so that the zygomatic implant system forms a substructure that is not in direct contact with a dental restoration, i. e. an artificial tooth or artificial teeth. This is illustrated in the exemplary twelfth embodiment of figure 12, in which an abutment 40 is assembled as a separate part using an assembly screw 52 at the coronal superstructure interface 4 at the coronal system end 3 of the implant system 1.

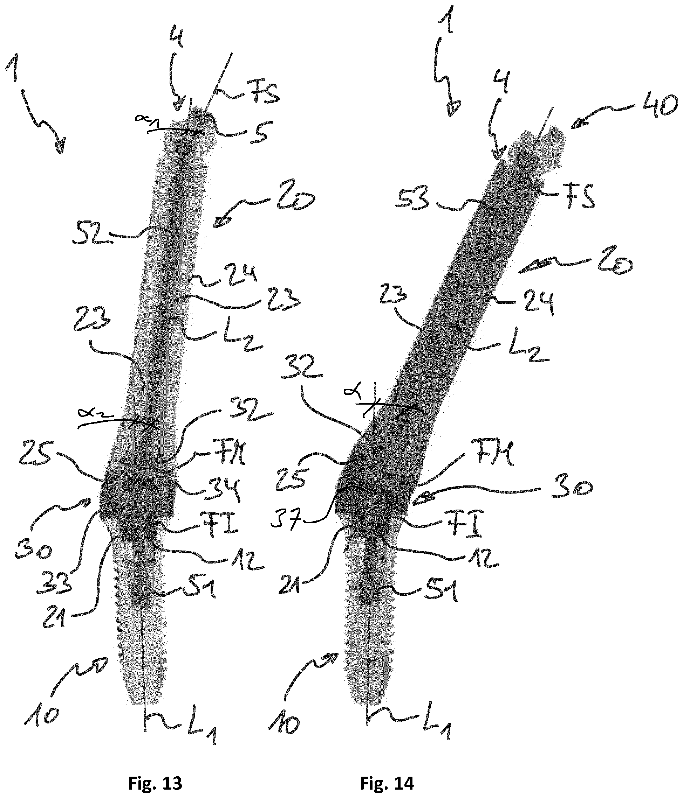

Figure 13 showing an exemplary thirteenth embodiment particularly differs from the eleventh embodiment illustrated in figure 11 in that an assembly screw 52 is extending through basically the entire elongated section 24. As a result, the assembly screw 52 may act as an expansion screw. Such a screw can be exposed to a higher amount of absolute strain when tightened for assembly of the elongated section 24 to the apical subcomponent 30. This is due to its increased length in comparison to an assembly screw 52 as shown in figure 11. This results in a more reliable connection between components.

Figure 14 illustrates a fourteenth exemplary embodiment. In this embodiment, the apical subcomponent 30 is joined with the apical end of the elongated section 24 of the second component 20, wherein the implant screw 51 can be inserted into the apical end of the through hole 37 formed in a coronal-apical direction of the apical subcomponent 30.

The implant screw may also be captured as described above by integrally joining the apical subcomponent 30 and the elongated section 24. More specifically, the apical intermediate interface 25 at the apical end of the elongated section 24 and the coronal intermediate interface 32 at the coronal end of the apical subcomponent 30 may in a first step be assembled using a snap-fit, press-fit, or threaded connection. Then the elongated section 24 and the apical subcomponent 30 are joined by a circumferential weld, in particular a laser weld. For fixing the opposing sides of an interface to each other by means of a weld, the interface preferably has a face-to-face configuration and even more preferably also an indexing means. Nonetheless, joining is also an option when using the above described conical configuration for the intermediate interfaces 25, 32.

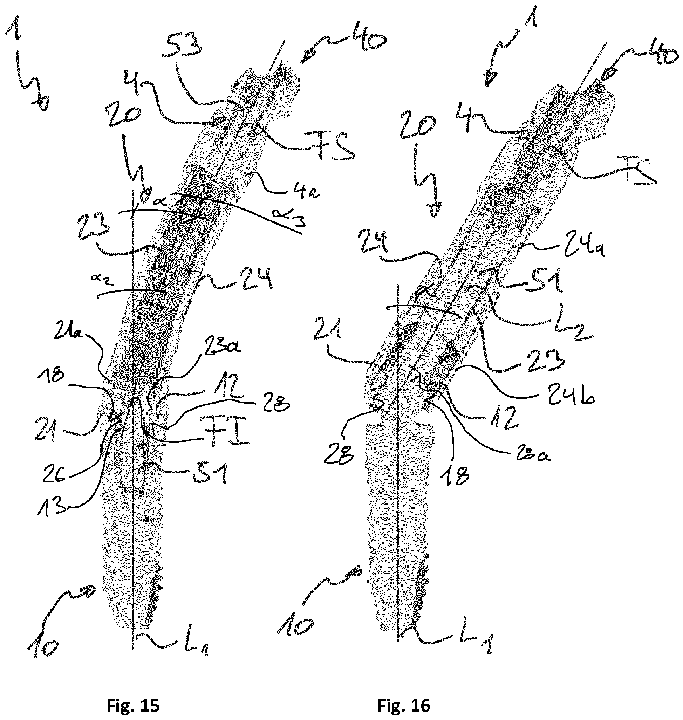

In the exemplary embodiment of figure 15, the implant interfaces 12, 21 are configured as ball joint interfaces. As also shown in figure 15, the elongated section 24 may be curved, which contributes with an angle α₃ to the angularity of the zygomatic implant system 1, i. e. the angle α between the superstructure interface axis FS and the longitudinal axis L₁. The angle α₃ is defined by the inclination between the longitudinal axis at the apical end of the elongated section 24 and the longitudinal axis at the coronal end of the elongated section 24.

The second component 20 is an assembly of an elongated section 24, a coronal superstructure interface part 4a and an apical implant interface part 21a. The elongated section 24 and the parts 4a and 21a are preferably integrally joined by welding. Nonetheless, any of the other previously described connection techniques may also be applied.

The apical implant interface 21 and the coronal implant interface 12 comprise a spherical joint surface 28 and a spherical joint surface 18, respectively. These spherical joint surfaces 18, 28 may be moved relative to each other. This causes a rotational adjustment between the first component 20 and the second component 10 of the implant system 1, i.e. an adjustment of the angle α between the superstructure interface axis FS and the longitudinal axis L₁ of the first component 10.

In the exemplary embodiment of figure 15, the coronal implant interface 12 of the first component 10 comprises a spherical interface surface 18 that is formed as a spherical recess. Accordingly, the apical implant interface 21 of the second component 20 comprises a spherical joint surface 28 that is formed as a spherical protrusion.

Both spherical joint surfaces 18, 28 have a preferably continuous annular shape about an implant screw hole 26 and blind hole 13 for insertion of an implant screw 51. In order to allow for a relative movement, the implant screw hole 26 within the spherical joint surface 28 of the second component 20 has a larger diameter than the shaft of the implant screw 51.

In an assembled state, the spherical joint surfaces 18 and 28 are in contact with each other and remain in contact due to the implant screw 51. Preferably, the through hole 23 comprises at the apical implant interface 21 of the second component 20 a spherically shaped screw seat 23a for a correspondingly shaped screw head of the implant screw 51. This provides an optimum support of the screw head when tightening the implant screw 51 for fixing the angularity of the ball joint.

The angular orientation α₂ of the second component 20 in relation to the first component 10 is fixed by tightening the implant screw 51 so that the spherical joint surface 18 of the coronal implant interface 12 is pressed against the spherical joint surface 28 of the apical implant interface 21. This result in a friction force that is created between the two spherical joint surfaces 18, 28 that prevents any relative movement within the implant interface.

As a result of the ball joint configuration, the implant interface of the fifteenth embodiment has in contrast to any of the embodiments previously described an angled interface axis FI. This is caused by the angle α₂ between L₂ and L₁ being established due to the adjustment of the ball joint interface instead of by the structure of a component such as the curved elongated section 24 of this embodiment or the apical subcomponent 30 of previous embodiments.

Further, the ball joint may be configured as a ball-and-socket joint that is assembled by a snap fit so that apical implant interface 21 having a ball shape is enclosed by the coronal implant interface 12 having a socket shape to a degree that the ball shape is retained in the socket shape. In a further modification, the ball joint configuration may be replaced by a hinge configuration. In this configuration, the joint is adjustable about one axis transverse to the longitudinal axis L₁ of the first component 10 instead of three axes as in the case of a ball joint.

Figure 16 shows another embodiment of a zygomatic implant system 1 that comprises an implant interface that is configured as a ball joint. One of the differences between the sixteenth embodiment illustrated in figure 16 and the fifteenth embodiment illustrated in figure 15 is that the spherical joint surfaces 18 and 28 have a curvature opposite to the curvature of their respective counterparts of figure 15. In other words, the above-noted recess and protrusion are interchanged between the coronal implant interface 12 of the first component 10 and the apical implant interface 21 of the second component 20.

As a result and as shown in figure 16, the implant screw 51 represents a part 28a of the spherical joint surface of the apical implant interface 21 that can be tightened against the spherical joint surface 18 of the coronal implant interface 12. This also creates a friction force between the spherical joint surfaces 18 and 28. For assembly of the ball joint of figure 16, the elongated section 24 is subdivided into a first part 24a and a second part 24b that are preferably engaged using a threaded connection. In this way, the portion of the coronal implant interface 12 formed as a spherical joint surface 18 can enter the through hole 23 of the second component 20. Once inserted, the first part 24a and the second part 24b are fully assembled so that a part of the spherical joint surface 28 is arranged diametrically opposite to another part 28a of the spherical joint surface 28 that is formed at the apical end of the implant screw 51 in relation to the spherical coronal implant interface 12. This arrangement enables the implant screw 51 to exert a friction force between the joint surfaces 18 and 28.

Alternatively, the first part 24a and the second part 24b may be integrally formed as one part. Such an integral part has coronally a tubular section and its apical end an inner spherical joint surface 28. The tubular section of this part further comprises an opening for insertion of the spherical head 18 of the first component 10. A slit is formed apically of this opening and extends into the spherical joint surface 18 to the apical end of the integral part. The slit has a width that allows the neck of the first component's spherical head to pass. As a result, the spherical joint surface 18 of the first component 10 is received in the recess formed by the inner spherical joint surface 28 of the integral part. By screwing the implant screw 51 until the spherical section 28a of the implant screw 51 is in contact with the spherical joint surface 18 of the first component 10, the first component 10 is prevented from exiting through above-noted opening, i. e. it is captured within the integrally formed part.

As a further alternative, the first part 24a and the second part 24b of figure 16 may be formed as two parts, wherein the implant screw 51 is screwed onto the spherical section 28a of the spherical head 18 received in the tubular section of the first part 24a. The tubular section the first part 24a comprises an opening for insertion of the spherical head 18 of the first component 10. A slit is formed apically of this opening and extends into the spherical joint surface 18 to the apical end of the first part 24a. The slit has a width that allows the neck of the first component's spherical head to pass. As a result, the spherical joint surface 18 of the first component 10 is received by the inner spherical joint surface 28 of the first part 24a. The second part 24b is movable, in particular by threadably engaging an outer thread of the first part 24a, relative to the first part 24a in the apical direction. The first part 24a tapers outwardly with a first tapering angle at least partly in the coronal to apical direction and the second part 24b tapers outwardly with a second tapering angle at least partly in the coronal to apical direction, wherein the first tapering angle is larger than the second tapering angle. When moving the second part 24b relative to the first part 24a in the apical direction, the first component 10 is prevented from exiting through above-noted opening, i. e. the spherical head 18 is captured and preferably fixed in position within the first part 24a. Preferably, the first tapering angle and the second tapering angle are formed such as in a Morse cone mechanism.

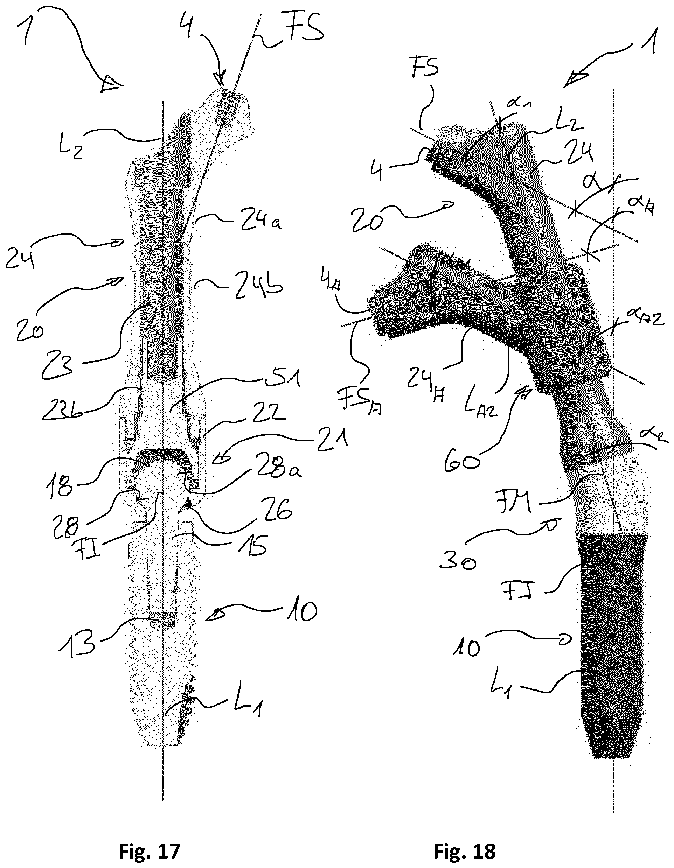

The embodiment shown in figure 17 shows yet another implant interface that is configured as a ball joint. In general, this implant interface corresponds to the implant interface of the sixteenth embodiment of figure 16. However, the spherical joint surface 18 is not integrally formed with the first component 10 but forms part of an interface screw 15 that is in threaded engagement with the first component 10.

Another difference is that the section of the spherical joint surface 28a that is included in the implant screw 51 has an annular shape. The spherical joint surface section 28a may be formed as a separate washer as shown in figure 17. Alternatively, it may be formed as part of the implant screw 51. The spherical joint surface 28 of the apical implant interface 21 also has an annular shape so that the contact between the spherical joint surface 18 and the joint surface 28, 28a is, as seen in the cross-section of figure 17, is a double ring contact.

Turning back to figure 16, the contact between the joint surface 18 and 28, 28a is in contrast to the embodiment shown in figure 17 is a ring-spherical section contact if the part of the joint surface 28a of the implants screw 51 has the same curvature as the joint surface 18 of the coronal implant interface 12. Alternatively, there may be a double ring contact (the ring of the joint surface 28 being discontinuous for being able to insert the spherical joint surface 18 of the first component 10) if the part of the joint surface 28a of the implant screw 51 has a curvature that is smaller than the curvature of the joint surface 18.

Turning back to figure 17, the apical implant interface 21 comprises a cylindrical hollow support body 22 with a screw seat formed by an annular section of the joint surface 28 for the interface screw 15. The support body 22 can be mounted to the elongated section 24, preferably by means of a threaded engagement. For assembly, the interface screw 15 is inserted into the support body 22 before bringing the interface screw 15 into a threaded engagement with the first component 10.

Similarly, the implant screw 51 is inserted into an apical opening of the elongated section 24 and brought into engagement with a thread 23b within the through hole 23. With the interface screw 15 supported by the joint surface 28 of the support body 22, the support body 22 is mounted to the elongated section 24. After this pre-assembly, the angularity of the implant interface can be adjusted as required and fixated by tightening the implant screw 51 with its partial joint surface 28a against the joint surface 18 for locking the ball joint using friction force created by this tightening of the implant screw 51.

Further, the second component 20 of the seventeenth embodiment comprises an elongated section 24 that is subdivided into a first part 24a and a second part 24b that are assembled as previously described. Further and as already described in relation to the eleventh embodiment, the coronal superstructure interface 4 is integrally formed with the second component 24 for attaching further superstructure parts to support the dental restoration to be installed or the dental restoration itself. A sleeve nut for holding the first part 24a and the second part 24b in relative position to each other is not shown here.

Figure 18 illustrates an eighteenth embodiment that applies a fork concept that is able to provide at least two and preferably two coronal superstructure interfaces 4 and 4A that are supported by solely one first component 10. This embodiment allows for support of a dental restoration comprising multiple teeth.

The eighteenth embodiment is based on the zygomatic implant system 1 of the fourth embodiment of figure 4. However, in addition to the fourth embodiment, the second component of the zygomatic implant system 1 in figure 18 further comprises a fork subcomponent 60. The fork subcomponent 60 is mounted to the elongated section 24. Preferably, the fork subcomponent can slide and/or rotate on the elongated section 24 in order to adjust the implant system 1 to the individual needs of a patient. After the adjustment, the fork subcomponent 60 may be fixated. Fixation may be achieved between the elongated section 24 and the fork subcomponent 60 or simply by the superstructure mounted to the implant system 1. Alternatively, the fork subcomponent 60 is integrally formed with the elongated section 24 either by welding or by casting.

The fork subcomponent 60 includes an elongated section 24A along a longitudinal axis L_{A2} and a coronal superstructure interface 4A along a superstructure interface axis FSA. As the embodiment of figure 18 shows, a superstructure interface axis FSA may be arranged at an angle α_{A1} in relation to the longitudinal axis L_{A2}. Together with the angle α_{A2} between the longitudinal axis L₁ and the longitudinal axis L_{A2}, the angle α_{A1} forms the inclination α_{A} of the superstructure interface axis FSA in relation to the longitudinal axis L₁ of the first component, i.e. the angularity α_{A} of the additional coronal superstructure interface 4A. The coronal superstructure interfaces 4, 4A may be configured like any of the preceding coronal superstructure interfaces that are arranged at an angle in relation to the longitudinal axis of the corresponding elongated section.

Due to its structure including a fork subcomponent 60, the zygomatic implant system 1 of the eighteenth embodiment may support one dental superstructure at two points, such as a bridge, with only one first component 10 that is in turn anchored in the zygomatic bone of a patient. Alternatively, the fork configuration of this embodiment may be the basis for two separate dental superstructures to be attached to this implant.

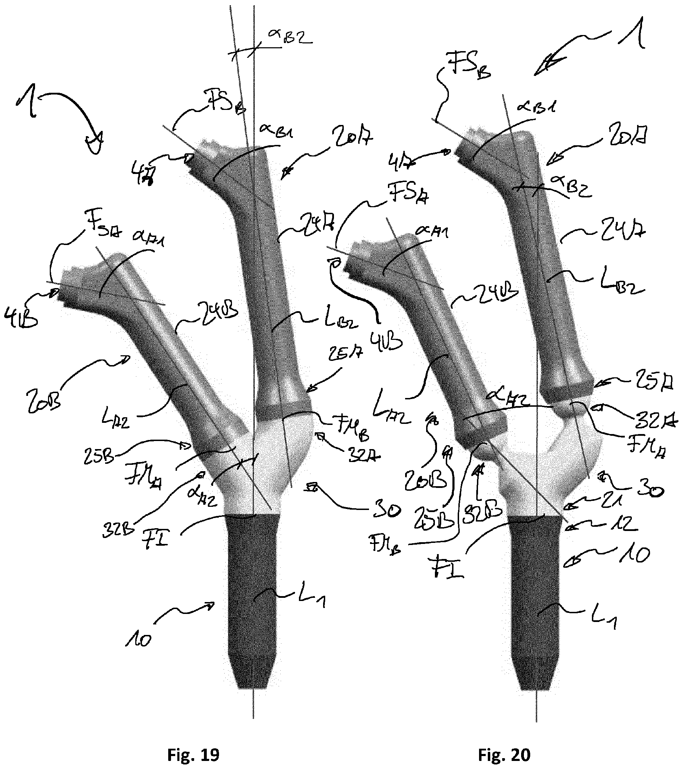

Figure 19 illustrates another embodiment of a zygomatic implant system 1 with a fork configuration. In this nineteenth embodiment, the fork concept is included in an apical subcomponent 30 instead of in a separate fork subcomponent 60 (see figure 18). Like in previous embodiments, the apical subcomponent 30 is connected to an apical implant interface of the apical subcomponent along an implant interface axis FI to a coronal implant interface of the first component 10.

Further, the apical subcomponent 30 comprises two coronal intermediate interfaces 32A, 32B along two intermediate interface axes FMA and FMB. Accordingly, the implant system 1 comprises a first elongated section 24A with a first coronal superstructure interface 4A along a first superstructure interface axis FSA and a second elongated section 24B with a second coronal superstructure interface 4B along a second superstructure interface axis FSB. As illustrated in figure 19, these superstructure interface axes may be arranged at an angle to the respective longitudinal axes L_{A2}, L_{B2} of the elongated sections 24A, 24B. As in the previous embodiment, this allows for an individual adjustment of the coronal superstructure interfaces' axes to the anatomical situation of a patient.

Figure 20 shows yet another embodiment of the fork concept. This twentieth embodiment differs from the nineteenth embodiment particularly at the intermediate interfaces 25A, 32A for supporting a first coronal superstructure interface 4A and the intermediate interfaces 25B, 32B for supporting a second coronal superstructure interface 4B. As the exemplary embodiment of figure 20 shows, these intermediate interfaces may be configured as ball joints. Further, the implant interfaces 12, 21 may be configured as an angularly fixed interface. Both the ball joints interfaces and the angularly fixed interface have already been described in detail in relation to embodiments above. The angular adaptability of this configuration is particularly high.

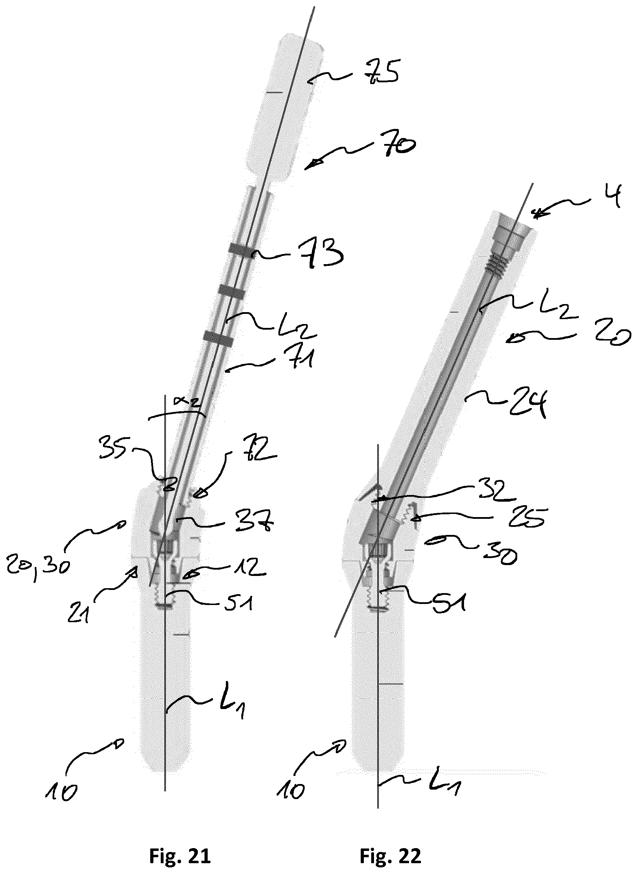

Figures 21 to 23 illustrate the steps of an assembly and installation of the zygomatic implant system. In order to prepare the zygomatic bone of a patient for the placement of a first component 10, access to this bone is preferably provided by means of a groove along or a through hole on the labial side of the maxilla. As a result, the zygomatic implant system is not passing through the sinus cavity of a patient. Instead the substructure established by the system only runs along the sinus cavity, preferably with a bone tissue barrier in between. This has the advantage that infections originating from the sinus cavity or affecting the sinus cavity are prevented.

The first component 1 forming an implant is screwed into the zygomatic bone of the patient after preparing the implantation site using an external thread. Preparation preferably includes drilling a hole into the zygomatic bone for receiving the implant.

Figure 21 shows a situation, in which a first component 10 of the zygomatic implant system 1 has already been implanted into the zygomatic bone of a patient (not shown). In a next step, an apical subcomponent 30 is placed via the coronal implant interface 12 of the first component and the apical implant interface 21 of the second component 20 onto the first component 10. The interfaces 12, 21 have a face-to-face configuration with a conical protrusion that assists in assembly by guiding the interfaces 12, 21 to a predetermined position in relation to each other. Naturally, any of the other interface configurations described above may be used instead.

The placement of the apical subcomponent 30 onto the first component 10 may be assisted by a handling tool 70. This handling tool 70 comprises a guide sleeve 71 and a screwdriver 75. The tubular guide sleeve 71, preferably with an apical assembly interface 72 at its apical end that is configured to engage a corresponding coronal assembly interface 35 at the coronal end of the apical subcomponent 30. In the present embodiment, the assembly interface comprises a thread. The coronal assembly interface 35 of the apical subcomponent 30 may be an identical to the coronal intermediate interface 32 (cf. figure 22). Preferably, the guide sleeve 71 is brought into engagement with the apical subcomponent 30 before placing the apical subcomponent 30. In this way, the guide sleeve 71 may be used to maneuver the apical subcomponent 30 of the second component 20 onto the first component 10. Even more preferably, the guide sleeve 71 and the apical subcomponent are delivered as a pre-assembled unit. During placement, the angulation may be adjusted. Further, a position of the system in relation to the maxilla's ridge may be determined with the assistance of the guide sleeve prior preparation of the bone.

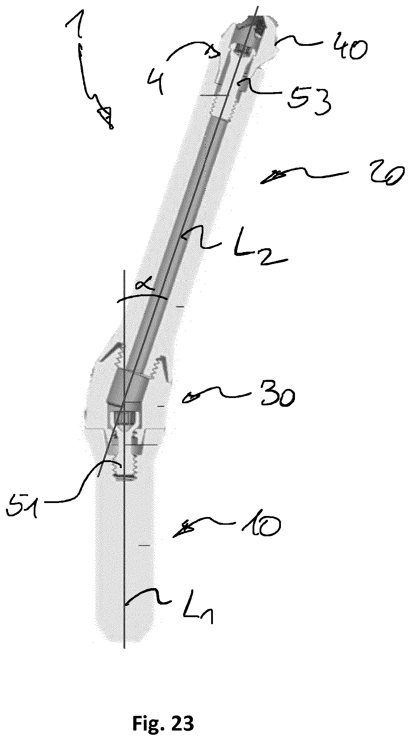

As illustrated in figure 21, the apical subcomponent 30 provides an angle α₂ to the zygomatic implant system 1, which in the illustrated configuration represents the angularity of the implant system 1 (cf. figure 23). Accordingly, the guide sleeve 71 extends along the longitudinal axis L₂ of the elongated section 24 to be installed in a subsequent step.

After placement of the apical subcomponent 30 on the first component 10, the screwdriver 75 is inserted through the longitudinal cavity of the tube-shaped guide sleeve 71. Thus, the guide sleeve 71 supports the screwdriver 75 during fastening of the apical subcomponent 30 to the first component 10 using an implant screw 51. Advantageously, the guide sleeve 71 prevents any surrounding tissue from being damaged by the rotational movement of the screwdriver 75. For fastening, the apical tip of the screwdriver 75 is engaged with the head of the implant screw 51 in order to transfer a rotation of the screwdriver 75 to the head of the implant screw 51.

In the embodiment of figure 21, the implant screw 51 has been inserted into the apical subcomponent 30 prior engagement of the guide sleeve 71. As a result, the implant screw 51 is captured between the guide sleeve 71 and a screw seat within the through hole 37 of the apical subcomponent 30. Accordingly, the implant screw 51 cannot get accidentally lost during chairside handling of the apical subcomponent 30.

After fastening the apical subcomponent 30 to the first component 10 by means of the implant screw 51, markings 73 on the guide sleeve 71 may be provided for facilitating the determination of the required length of the zygomatic implant system 1, in particular the length of the elongated section 24 of the second component 20.

Following the determination of the required length of the elongated section 24, the handling tool 70 is removed and a corresponding elongated section 24 with a coronal superstructure interface 4 is placed on top of the apical subcomponent 30.

In the exemplary embodiment of figure 22, the engagement between the apical intermediate interface 25 of the elongated section 24 and the coronal intermediate interface 32 of the apical subcomponent 30 is achieved by threads included in these intermediate interfaces 25, 32. As can be seen by a comparison between figures 21 and 22, the thread of the coronal intermediate interface 32 is preferably the same thread that has been previously utilized for the engagement with the guide sleeve 71.

The skilled person will appreciate that any other of the previously described intermediate interfaces may be used, such as an interface that is fastened using an assembly screw or a superstructure screw.

After placement, the elongated section 24 may be tightened using another tool that engages the coronal superstructure interface 4 of the elongated section 24, for example by utilizing a thread or indexing means of this interface.

Having placed and assembled the zygomatic implant system 1 at the site of treatment, the zygomatic implant system 1 now forms a substructure for supporting a dental superstructure. In figure 23, the dental superstructure is re-presented by an abutment 40 that has been fastened to the coronal superstructure interface 4 of the second component 20. Finally, the dental restoration can be attached to the abutment 40 for providing the desired aesthetic and functional objective of the dental treatment.

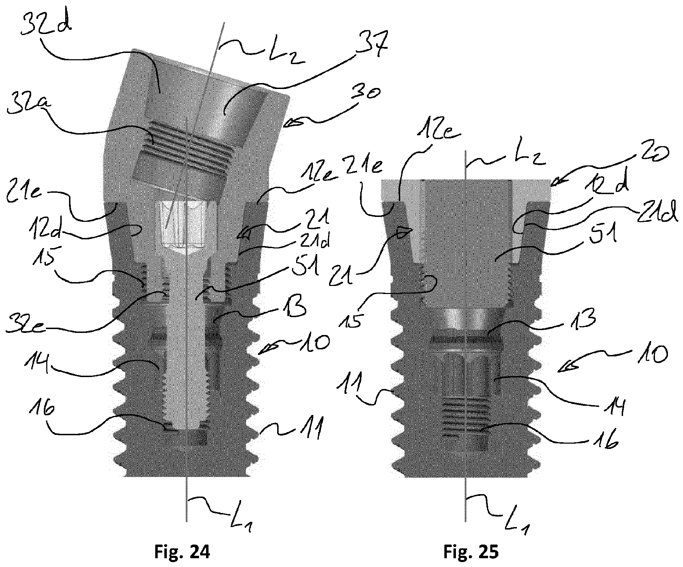

Figures 24 and 25 illustrate a detailed view of an exemplary embodiment of an interface configuration between a first component 10 and apical subcomponent 30 (figure 24) or second component 20 (figure 25). These interface configurations may be applied to any one of the embodiments described above. Alternatively, the interface configurations may also be applied to other first components intended to be anchored within the bone tissue of a patient's jaw bone and the corresponding apical subcomponent 30 (figure 24) or second component 20 (figure 25). Preferably, apical subcomponent 30 is integrally formed.

Like in the previously described embodiments, the first component 10 in these figures is configured to be anchored within the bone tissue of a patient's jaw bone or zygomatic bone. For this reason, the first component 10 preferably comprises an outer thread 11.

Further, the first component 10 comprises a coronal implant interface 12 including a blind hole or implant screw hole 13. The implant screw hole 13 may include an indexing structure 14 that allows for an assembly with another component in a predetermined number of orientations.

As illustrated in figures 24 and 25, the implant screw hole 13 further includes a first threaded portion 15 and a second threaded portion 16. The first threaded portion 15 is arranged coronally to the second threaded portion 16. The female thread of the first threaded portion 15 has an inner diameter large enough to let the outer diameter of a screw thread pass so that this thread of the screw is able to engage the female thread of the second threaded portion 16. Accordingly, the outer diameter of the thread of the second threaded portion 16 is smaller than the inner diameter of the thread of the first threaded portion 15.

As a result of this configuration comprising a first threaded portion 15 and a second threaded portion 16, it is possible to mount different second components to the first component 10 more effectively. In particular, the two threaded portions 15, 16 of the first component 10 allow to adapt the strength of the connection depending on the configuration of the second component 20, 30 to be mounted.

For example, figure 24 illustrates an apical subcomponent 30 of a second component 20 that is mounted to the coronal implant interface of the first component 10 via its apical implant interface 21. In this case, the apical subcomponent 30 is fastened to the first dental component 10 using an implant screw 51 that can be inserted through the through hole 37 of the angled apical subcomponent 30. For this reason, the implant screw 51 has a smaller diameter and the thread of the implant screw 51 is configured to engage the second threaded portion 16 having a smaller diameter than the first threaded portion 15.

As further shown in figure 24, the through hole 37 of the apical subcomponent 30 may include on its apical side a handling thread 32e. This apical handling thread 32e serves to retain the implant screw 51 while maneuvering the apical subcomponent 30 to its mounting position on top of the first component 10. This facilitates handling of the implant screw 51 since the handling thread 32e allows to move the apical subcomponent 30 and the implant screw 51 as a unit.

Turning to figure 25, a second component 20 is mounted to the first component 10 that differs from the second component of figure 24 in that it does not comprise an angled apical subcomponent 30. As a result, an implant screw 51 with a larger diameter may be used that engages the first threaded portion 15 having the larger diameter thread in comparison to the second threaded portion 16.

As also illustrated in figures 24 and 25, the implant screw hole 13 may further comprise a conical portion 12d. This conical portion 12d may interact with a conical portion 21d of the apical subcomponent 30 or the second component 20 for guiding the apical implant interface 21 during assembly to the first component 10. In particular, the conical portions 12d and 21d assist in guiding the subcomponent 30 or the second component 20 into the blind hole 13 of the first component until the sealing surface 12e of the first component 10 gets into contact with the sealing surface 21e of the subcomponent 30 or the second component 20.

As illustrated in figures 24 and 25, the first component may comprise a first threaded portion 15 and the apical subcomponent 30 may comprise a thread 32a. Preferably, the first threaded portion 15 and thread 32a have substantially the same diameter. This has the advantage that implant screw 51 cmayan engage first threaded portion 15 or thread 32a in order to fasten subcomponent 20 to apical subcomponent 30 or first component 10.

In order to provide an efficient seal between the sealing surfaces 12e and 21e, the conical portions 12d and 21d are preferably dimensioned so that a gap exists between their conical surfaces in an assembled state, i. e. after the implant screw 51 has been fastened. In other words, the conical portions 12d and 21d have a guiding function but do not engage each other and, thus, do not form a seal. Instead, a seal between the two components is exclusively formed between the sealing surfaces 12e and 21e.

As illustrated, the sealing surfaces 12e and 21e are preferably flat and, in particular, extend perpendicular to the longitudinal axis L₁ of the first component 10. However, as a modification, the sealing surfaces 12e and 21e may also be conical to form a conical seal. Further, the angle of the sealing surfaces 12e and 21e in relation to the longitudinal axis of the first component 10 may slightly differ for rather or substantially providing a line contact instead of a surface contact. In this case, the different angles of the surfaces 12e and 21e are preferably chosen so that the contact between these surfaces occurs at their outer periphery.

As a modification to figures 24 and 25, it is also possible to form an effective seal between the two components as described above, for example in relation to figure 7.

As illustrated in the different exemplary embodiments of an implant system 1 according to the present disclosure, the total length of such an implant system between the coronal system end 3 and the apical system end 2 results from the sum of individual fixed lengths of the components. In other words, the components neither have an adjustable length nor are two components adjustably engaged for adjusting the total length of these two components. Except for the fork component 60 of figure 18, this also applies to the multi-component zygoma implant systems 1 that comprise multiple coronal superstructure interfaces 4A, 4B (cf. figures 19 to 20). Consequently, an adjustment of the length of a zygoma implant system 1 is preferably only possible by appropriately choosing the length of each component of this zygoma implant system 1.

Further, the above-described embodiments include as the longest component preferably the second component 20 (not including an apical subcomponent 30, if present) that comprises the coronal system end 3 of the zygoma implant system 1. As described above, this has the advantage that the distance between the zygomatic bone and the mouth of a patient, where a dental superstructure or restoration is to be installed to the coronal superstructure interface 4 of the implant system, is basically bridged by a single component. This enhances the stability and strength of the implant system.

Further, this configuration is particularly advantageous in case of a revision. Generally, it is more likely that an infection at an implant occurs on the side, where the mouth of the patient is. Here, the length of the component primarily bridging the distance between the zygomatic bone and the mouth of the patient prevents the inflammation from migrating towards the first component 10 of the zygomatic implant system 1 that is anchored within the bone tissue of the zygomatic bone. By removal of this longest component, a large part of the surface area, where an infection may spread, can be removed, whereas the first component remains anchored and is reusable after the infection has been treated. Alternatively, this configuration is also advantageous in case of a revision in case the component primarily bridging the distance between the zygomatic bone and the mouth is damaged; in this case, said component can be removed and replaced.

If a subcomponent 30 is present, it is preferably located as an intermediate component at the side of the first component 10. The subcomponent 30 is preferably configured to be the shortest component of the zygomatic implant system 1. Accordingly, the subcomponent particularly has a length of, for example, at maximum 12 mm, 10 mm, 8 mm or 6 mm. As illustrated in the figures, the subcomponent 30 is preferably angular.

### REFERENCE SIGNS

The following lists the reference signs used in the description and the drawings. Throughout the drawings same reference signs refer to features that have the same or an equivalent function and/or structure.
- 1: multi-component zygoma implant system
- 2: apical system end
- 3: coronal system end
- 4: coronal superstructure interface
- 4a: coronal superstructure interface part
- 5: superstructure screw hole
- 5a: superstructure thread
- 10: first component, implant
- 11: outer thread
- 12: coronal implant interface
- 12d: conical portion
- 12e: sealing surface
- 13: blind hole, implant screw hole
- 14: indexing structure
- 15: first threaded portion
- 16: second threaded portion
- 18: coronal spherical joint surface
- 20: second component (acting as implant extension)
- 21: apical implant interface
- 21a: apical implant interface part
- 21d: conical portion
- 21e: sealing surface
- 22: support body
- 23: through hole
- 23a: screw seat
- 23b: screw capturing thread
- 24: elongated section
- 24a: first part
- 24b: second part
- 25: apical intermediate interface
- 25a: thread
- 25d: conical portion
- 26: implant screw hole
- 26a: screw capturing thread
- 26b: screw seat
- 28: apical spherical joint surface
- 30: apical subcomponent of the second component
- 32: coronal intermediate interface
- 32a: thread
- 32b: interface face
- 32c: indexing means
- 32d: conical portion
- 32e: handling thread
- 33: first part
- 34: second part
- 37: through hole
- 40: dental superstructure
- 44: apical superstructure interface
- 51: implant screw
- 52: assembly screw
- 53: superstructure screw
- 54: cover
- 60: fork subcomponent
- 70: handling tool
- 71: guide sleeve
- 73: markings
- 75: screwdriver

- L₁: longitudinal axis of first component
- L₂: longitudinal axis of elongated body

- A: first fork component
- B: second fork component

- FS: superstructure interface axis
- FI: implant interface axis
- FM: intermediate interface axis

- α: angle between FS and L₁ (system angularity)
- α₁: angle between FS and L₂
- α₂: angle between L₂ and FI or L₁
- α₃: angle between longitudinal ends of elongated section

## Claims

1. An implant system (1) for implantation into a zygomatic bone, the implant system forming a dental substructure and comprising an apical system end (2) and a coronal system end (3), the coronal system end including a coronal superstructure interface (4) along a superstructure interface axis (FS) for supporting a dental superstructure (40), wherein the implant system has a length in a range of 30 mm to 60 mm and includes at least two components (10, 20), **characterized in that** the implant system comprises a second component (20), wherein the second component is an implant extension for bridging the distance between a zygomatic bone and a maxilla of a patient, includes an elongated section (24) with a longitudinal axis (L₂), an apical implant interface (21) along the implant interface axis (FI) for an assembly to the first component (10), wherein the second component (20) further comprises:
an apical intermediate interface (25) along an intermediate interface axis (FM), the apical intermediate interface preferably being located at the apical end of the elongated section (24), and
an apical subcomponent (30), the apical subcomponent including a coronal intermediate interface (32) for mounting the apical subcomponent to the apical intermediate interface (25) and a through hole (37), wherein
the apical implant interface (21) of the second component is formed at the apical end of the apical subcomponent, and
the intermediate interface axis (FM) of the subcomponent being parallel to or at an angle (α1) to the implant interface axis (FI), wherein the angle (α1) is greater than 0°.

2. The implant system (1) of claim 1, comprising a first component (10) with a longitudinal axis (L₁), wherein the first component is an implant for implantation into the zygomatic bone, forms the apical system end (2) of the implant system, and includes a coronal implant interface (12) along an implant interface axis (FI), preferably wherein the superstructure interface axis (FS) is inclined at an angle (α) to the longitudinal axis (L₁) of the first component (10).

3. The implant system (1) of any one of the preceding claims, wherein the second component forms the coronal superstructure interface (4) of the implant system, preferably wherein the elongated section (24) comprises a first part (24a) and a second part (24b) that are joined by a press-fit, a threaded connection and/or a weld.

4. The implant system (1) of claim 3, wherein the second component (20) further comprises a through hole (23), the through hole (23) preferably extending along the longitudinal axis (L₂) of the second component.

5. The implant system (1) of any one of claims 3 to 4, wherein the superstructure interface axis (FS) is inclined at an angle (α1) and/or the implant interface axis (FI) is inclined at an angle (α₂) in relation to the second component's longitudinal axis (L₂).

6. The implant system (1) of any one of claim 1 to 5, wherein the angle (α1) is in a range of 5° to 35°, more preferably in a range of 10° to 20°, and most preferred in a range of 14° to 20°, preferably wherein the coronal intermediate interface (32) of the apical subcomponent (30) and the apical intermediate interface (25) of the elongated section (24) are configured to be in face-to-face contact or in contact by a conical connection, in particular with indexing.

7. The implant system (1) of claim 6, wherein the coronal intermediate interface (32) of apical subcomponent (30) and the apical intermediate interface (25) of the elongated section (24) are fixed to each other by means of an assembly screw (52), a superstructure screw (53), or a thread (25a) of the apical intermediate interface (25) of the elongated section (24).

8. The implant system (1) of any one of claims 3 to 7 as dependent on claim 2, wherein the apical implant interface (21) of the second component (20) comprises an implant screw hole (26) for fixing the apical implant interface of the second component to the coronal implant interface (12) of the first component with an implant screw (51), wherein the implant screw hole (26) comprises a thread (26a) and/or a screw seat (26b) and is preferably a through hole in an assembled state of the implant system.

9. The implant system (1) of claim 8 as dependent on claim 4, wherein the implant screw hole (26) forms a portion of the through hole (23) extending along the longitudinal axis of the second component (20).

10. The implant system (1) of any one of claims 6 to 9, wherein the apical subcomponent (30) is integrally formed or includes a first part (33) and a second part (34), the first part (33) and the second part (34) forming a portion within the through hole (37) for capturing a head of an implant screw (51) when being attached to each other, wherein the first part and the second part are preferably joined by a press-fit, a threaded connection and/or a weld, in particular a laser weld.

11. The implant system (1) of any one of claims 3 to 7, wherein the apical implant interface (21) of the second component (20) and the coronal implant interface (12) of the first component (10) and/or the apical intermediate interface (25) of the elongated section (24) and the coronal intermediate interface (32) of the apical subcomponent (30) are configured as a threaded connection.

12. The implant system (1) of any one of claims 3 to 11, wherein the second component (20) is longer than the first component (10).

13. The implant system (1) of any one of the preceding claims, wherein the coronal superstructure interface (4) comprises a superstructure screw hole (5) including a thread (5a) for fixing a dental superstructure to the coronal superstructure interface, preferably wherein the superstructure screw hole (5) is a separate screw hole, in particular a blind hole, or forms a portion of the through hole (23).

14. The implant system (1) of any one of claims 3 to 13, wherein at least the elongated section (24) of the second component (20) is straight and/or curved.

15. The implant system (1) of any one of claims 3 to 13 as dependent on claim 2, wherein the coronal implant interface (12) of the first component (10) and the apical implant interface (21) of the second component (20) are configured as a ball joint, wherein the ball joint comprises a locking mechanism for locking the ball joint in a predetermined angular position, preferably wherein the locking mechanism is configured to lock a pair of joint surfaces (18, 28) of the ball joint by a friction force in the ball joint.

16. The implant system (1) of any one of the preceding claims as dependent on claim 3, wherein the second component (2) comprises the apical implant interface and forks to at least two, in particular two, coronal superstructure interfaces.

17. The implant system (1) according to any one of the preceding claims, wherein the coronal superstructure interface (4) is arranged at the coronal end of an integrally formed abutment section for attaching a dental superstructure, in particular a dental restoration.

## Patentansprüche

1. Implantatsystem (1) zur Implantation in ein Jochbein, wobei das Implantatsystem eine dentale Substruktur bildet und ein apikales Systemende (2) und ein koronales Systemende (3) umfasst, wobei das koronale Systemende eine koronale Superstrukturschnittstelle (4) entlang einer Superstrukturschnittstellenachse (FS) zum Tragen einer dentalen Superstruktur (40) einschließt, wobei das Implantatsystem eine Länge in einem Bereich von 30 mm bis 60 mm aufweist und mindestens zwei Komponenten (10, 20) einschließt, **dadurch gekennzeichnet, dass** das Implantatsystem eine zweite Komponente (20) umfasst, wobei die zweite Komponente eine Implantatverlängerung zum Überbrücken des Abstands zwischen einem Jochbein und einer Maxilla eines Patienten ist, einen länglichen Abschnitt (24) mit einer Längsachse (L₂), eine apikale Implantatschnittstelle (21) entlang der Implantatschnittstellenachse (FI) für eine Montage an der ersten Komponente (10) einschließt, wobei die zweite Komponente (20) ferner Folgendes umfasst:
eine apikale Zwischenschnittstelle (25) entlang einer Zwischenschnittstellenachse (FM), wobei die apikale Zwischenschnittstelle vorzugsweise an dem apikalen Ende des länglichen Abschnitts (24) positioniert ist, und
eine apikale Subkomponente (30), wobei die apikale Subkomponente eine koronale Zwischenschnittstelle (32) zum Montieren der apikalen Subkomponente an der apikalen Zwischenschnittstelle (25) und ein Durchgangsloch (37) einschließt, wobei
die apikale Implantatschnittstelle (21) der zweiten Komponente an dem apikalen Ende der apikalen Subkomponente gebildet ist, und
die Zwischenschnittstellenachse (FM) der Subkomponente parallel zu oder in einem Winkel (α1) zu der Implantatschnittstellenachse (FI) ist, wobei der Winkel (α1) größer als 0° ist.

2. Implantatsystem (1) nach Anspruch 1, umfassend eine erste Komponente (10) mit einer Längsachse (L₁), wobei die erste Komponente ein Implantat zur Implantation in das Jochbein ist, das apikale Systemende (2) des Implantatsystems bildet und eine koronale Implantatschnittstelle (12) entlang einer Implantatschnittstellenachse (FI) einschließt, vorzugsweise wobei die Superstrukturschnittstellenachse (FS) in einem Winkel (α) zu der Längsachse (L₁) der ersten Komponente (10) geneigt ist.

3. Implantatsystem (1) nach einem der vorhergehenden Ansprüche, wobei die zweite Komponente die koronale Superstrukturschnittstelle (4) des Implantatsystems bildet, vorzugsweise wobei der längliche Abschnitt (24) einen ersten Teil (24a) und einen zweiten Teil (24b) umfasst, die durch eine Presspassung, eine Gewindeverbindung und/oder eine Schweißung verbunden sind.

4. Implantatsystem (1) nach Anspruch 3, wobei die zweite Komponente (20) ferner ein Durchgangsloch (23) umfasst, wobei sich das Durchgangsloch (23) vorzugsweise entlang der Längsachse (L₂) der zweiten Komponente erstreckt.

5. Implantatsystem (1) nach einem der Ansprüche 3 bis 4, wobei die Superstrukturschnittstellenachse (FS) in einem Winkel (α₁) geneigt ist und/oder die Implantatschnittstellenachse (FI) in einem Winkel (α₂) in Bezug auf die Längsachse (L₂) der zweiten Komponente geneigt ist.

6. Implantatsystem (1) nach einem der Ansprüche 1 bis 5, wobei der Winkel (α₁) in einem Bereich von 5° bis 35°, noch bevorzugter in einem Bereich von 10° bis 20° und am meisten bevorzugt in einem Bereich von 14° bis 20° ist, vorzugsweise wobei die koronale Zwischenschnittstelle (32) der apikalen Subkomponente (30) und die apikale Zwischenschnittstelle (25) des länglichen Abschnitts (24) so konfiguriert sind, dass sie in flächigem Kontakt oder in Kontakt durch eine konische Verbindung, insbesondere mit Indexierung, sind.

7. Implantatsystem (1) nach Anspruch 6, wobei die koronale Zwischenschnittstelle (32) der apikalen Subkomponente (30) und die apikale Zwischenschnittstelle (25) des länglichen Abschnitts (24) mittels einer Montageschraube (52), einer Superstrukturschraube (53) oder eines Gewindes (25a) der apikalen Zwischenschnittstelle (25) des länglichen Abschnitts (24) aneinander fixiert sind.

8. Implantatsystem (1) nach einem der Ansprüche 3 bis 7 in Abhängigkeit von Anspruch 2, wobei die apikale Implantatschnittstelle (21) der zweiten Komponente (20) ein Implantatschraubenloch (26) zum Fixieren der apikalen Implantatschnittstelle der zweiten Komponente an der koronalen Implantatschnittstelle (12) der ersten Komponente mit einer Implantatschraube (51) umfasst, wobei das Implantatschraubenloch (26) ein Gewinde (26a) und/oder einen Schraubensitz (26b) umfasst und vorzugsweise in einem montierten Zustand des Implantatsystems ein Durchgangsloch ist.

9. Implantatsystem (1) nach Anspruch 8 in Abhängigkeit von Anspruch 4, wobei das Implantatschraubenloch (26) einen Bereich des Durchgangslochs (23) bildet, der sich entlang der Längsachse der zweiten Komponente (20) erstreckt.

10. Implantatsystem (1) nach einem der Ansprüche 6 bis 9, wobei die apikale Subkomponente (30) einstückig gebildet ist oder einen ersten Teil (33) und einen zweiten Teil (34) einschließt, wobei der erste Teil (33) und der zweite Teil (34) einen Bereich innerhalb des Durchgangslochs (37) zum Einfangen eines Kopfes einer Implantatschraube (51) bilden, wenn sie aneinander angebracht sind, wobei der erste Teil und der zweite Teil vorzugsweise durch eine Presspassung, eine Gewindeverbindung und/oder eine Schweißung, insbesondere eine Laserschweißung, verbunden sind.

11. Implantatsystem (1) nach einem der Ansprüche 3 bis 7, wobei die apikale Implantatschnittstelle (21) der zweiten Komponente (20) und die koronale Implantatschnittstelle (12) der ersten Komponente (10) und/oder die apikale Zwischenschnittstelle (25) des länglichen Abschnitts (24) und die koronale Zwischenschnittstelle (32) der apikalen Subkomponente (30) als eine Gewindeverbindung konfiguriert sind.

12. Implantatsystem (1) nach einem der Ansprüche 3 bis 11, wobei die zweite Komponente (20) länger als die erste Komponente (10) ist.

13. Implantatsystem (1) nach einem der vorhergehenden Ansprüche, wobei die koronale Superstrukturschnittstelle (4) ein Superstrukturschraubenloch (5) einschließlich eines Gewindes (5a) zum Fixieren einer dentalen Superstruktur an der koronalen Superstrukturschnittstelle umfasst, vorzugsweise wobei das Superstrukturschraubenloch (5) ein separates Schraubenloch, insbesondere ein Sackloch, ist oder einen Bereich des Durchgangslochs (23) bildet.

14. Implantatsystem (1) nach einem der Ansprüche 3 bis 13, wobei mindestens der längliche Abschnitt (24) der zweiten Komponente (20) gerade und/oder gekrümmt ist.

15. Implantatsystem (1) nach einem der Ansprüche 3 bis 13 in Abhängigkeit von Anspruch 2, wobei die koronale Implantatschnittstelle (12) der ersten Komponente (10) und die apikale Implantatschnittstelle (21) der zweiten Komponente (20) als ein Kugelgelenk konfiguriert sind, wobei das Kugelgelenk einen Verriegelungsmechanismus zum Verriegeln des Kugelgelenks in einer vorbestimmten Winkelposition umfasst, vorzugsweise wobei der Verriegelungsmechanismus so konfiguriert ist, dass er ein Paar von Gelenkflächen (18, 28) des Kugelgelenks durch eine Reibungskraft in dem Kugelgelenk verriegelt.

16. Implantatsystem (1) nach einem der vorhergehenden Ansprüche in Abhängigkeit von Anspruch 3, wobei die zweite Komponente (2) die apikale Implantatschnittstelle umfasst und sich in mindestens zwei, insbesondere zwei, koronale Superstrukturschnittstellen gabelt.

17. Implantatsystem (1) nach einem der vorhergehenden Ansprüche, wobei die koronale Superstrukturschnittstelle (4) an dem koronalen Ende eines einstückig gebildeten Abutment-Abschnitts zum Anbringen einer dentalen Superstruktur, insbesondere einer dentalen Restauration, angeordnet ist.

## Revendications

1. Système d'implant (1) destiné à être implanté dans un os zygomatique, le système d'implant formant une infrastructure dentaire et comprenant une extrémité de système apicale (2) et une extrémité de système coronaire (3), l'extrémité de système coronaire comportant une interface de superstructure coronaire (4) le long d'un axe d'interface de superstructure (FS) pour supporter une superstructure dentaire (40), dans lequel le système d'implant a une longueur dans une plage de 30 mm à 60 mm et comporte au moins deux composants (10, 20), **caractérisé en ce que** le système d'implant comprend un second composant (20), dans lequel le second composant est une extension d'implant permettant de combler la distance entre un os zygomatique et un maxillaire d'un patient, comporte une section allongée (24) avec un axe longitudinal (L₂), une interface d'implant apicale (21) le long de l'axe d'interface d'implant (FI) pour un assemblage avec le premier composant (10), dans lequel le second composant (20) comprend en outre :
une interface intermédiaire apicale (25) le long d'un axe d'interface intermédiaire (FM), l'interface intermédiaire apicale étant de préférence située au niveau de l'extrémité apicale de la section allongée (24), et
un sous-composant apical (30), le sous-composant apical comportant une interface intermédiaire coronaire (32) permettant de monter le sous-composant apical sur l'interface intermédiaire apicale (25) et un trou traversant (37), dans lequel
l'interface d'implant apicale (21) du second composant est formée au niveau de l'extrémité apicale du sous-composant apical, et
l'axe d'interface intermédiaire (FM) du sous-composant étant parallèle à l'axe d'interface d'implant (FI) ou selon un angle (α1) par rapport *à celui-ci*, dans lequel l'angle (α1) est supérieur à 0°.

2. Système d'implant (1) selon la revendication 1, comprenant un premier composant (10) avec un axe longitudinal (L₁), dans lequel le premier composant est un implant destiné à être implanté dans l'os zygomatique, forme l'extrémité de système apicale (2) et comporte une interface d'implant coronaire (12) le long d'un axe d'interface d'implant (FI), de préférence dans lequel l'axe d'interface de superstructure (FS) est incliné selon un angle (α) par rapport à l'axe longitudinal (L₁) du premier composant (10).

3. Système d'implant (1) selon l'une quelconque des revendications précédentes, dans lequel le second composant forme l'interface de superstructure coronaire (4) du système d'implant, de préférence dans lequel la section allongée (24) comprend une première partie (24a) et une seconde partie (24b) qui sont assemblées par un ajustement serré, une connexion filetée et/ou une soudure.

4. Système d'implant (1) selon la revendication 3, dans lequel le second composant (20) comprend en outre un trou traversant (23), le trou traversant (23) s'étendant de préférence le long de l'axe longitudinal (L₂) du second composant.

5. Système d'implant (1) selon l'une quelconque des revendications 3 à 4, dans lequel l'axe d'interface de superstructure (FS) est incliné selon un angle (α₁) et/ou l'axe d'interface d'implant (FI) est incliné selon un angle (α₂) par rapport à l'axe longitudinal (L₂) du second composant.

6. Système d'implant (1) selon l'une quelconque des revendications 1 à 5, dans lequel l'angle (α₁) est dans une plage de 5° à 35°, de manière davantage préférée de 10° à 20° et de manière préférée entre toutes de 14° à 20°, de préférence dans lequel l'interface intermédiaire coronaire (32) du sous-composant apical (30) et l'interface intermédiaire apicale (25) de la section allongée (24) sont configurées pour être en contact face à face ou en contact par une connexion conique, en particulier avec indexation.

7. Système d'implant (1) selon la revendication 6, dans lequel l'interface intermédiaire coronaire (32) du sous-composant apical (30) et l'interface intermédiaire apicale (25) de la section allongée (24) sont fixées l'une à l'autre au moyen d'une vis d'assemblage (52), d'une vis de superstructure (53) ou d'un filetage (25a) de l'interface intermédiaire apicale (25) de la section allongée (24).

8. Système d'implant (1) selon l'une quelconque des revendications 3 à 7 dépendantes de la revendication 2, dans lequel l'interface d'implant apicale (21) du second composant (20) comprend un trou de vis d'implant (26) pour fixer l'interface d'implant apicale du second composant à l'interface d'implant coronaire (12) du premier composant avec une vis d'implant (51), dans lequel le trou de vis d'implant (26) comprend un filetage (26a) et/ou un siège de vis (26b) et est de préférence un trou traversant dans un état assemblé du système d'implant.

9. Système d'implant (1) selon la revendication 8 dépendant de la revendication 4, dans lequel le trou de vis d'implant (26) forme une portion du trou traversant (23) s'étendant le long de l'axe longitudinal du second composant (20).

10. Système d'implant (1) selon l'une quelconque des revendications 6 à 9, dans lequel le sous-composant apical (30) est formé d'un seul tenant ou comporte une première partie (33) et une seconde partie (34), la première partie (33) et la seconde partie (34) formant une portion à l'intérieur du trou traversant (37) pour capturer une tête d'une vis d'implant (51) lorsqu'elles sont fixées l'une à l'autre, dans lequel la première partie et la seconde partie sont de préférence assemblées par un ajustement serré, une connexion filetée et/ou une soudure, en particulier une soudure laser.

11. Système d'implant (1) selon l'une quelconque des revendications 3 à 7, dans lequel l'interface d'implant apicale (21) du second composant (20) et l'interface d'implant coronaire (12) du premier composant (10) et/ou l'interface intermédiaire apicale (25) de la section allongée (24) et l'interface intermédiaire coronaire (32) du sous-composant apical (30) sont configurées comme une connexion filetée.

12. Système d'implant (1) selon l'une quelconque des revendications 3 à 11, dans lequel le second composant (20) est plus long que le premier composant (10).

13. Système d'implant (1) selon l'une quelconque des revendications précédentes, dans lequel l'interface de superstructure coronaire (4) comprend un trou de vis de superstructure (5) comportant un filetage (5a) pour fixer une superstructure dentaire à l'interface de superstructure coronaire, de préférence dans lequel le trou de vis de superstructure (5) est un trou de vis séparé, en particulier un trou borgne, ou forme une portion du trou traversant (23).

14. Système d'implant (1) selon l'une quelconque des revendications 3 à 13, dans lequel au moins la section allongée (24) du second composant (20) est droite et/ou courbée.

15. Système d'implant (1) selon l'une quelconque des revendications 3 à 13 dépendantes de la revendication 2, dans lequel l'interface d'implant coronaire (12) du premier composant (10) et l'interface d'implant apicale (21) du second composant (20) sont configurées comme un joint à rotule, dans lequel le joint à rotule comprend un mécanisme de verrouillage pour bloquer le joint à rotule dans une position angulaire prédéterminée, de préférence dans lequel le mécanisme de verrouillage est configuré pour bloquer une paire de surfaces d'articulation (18, 28) du joint à rotule par une force de friction dans le joint à rotule.

16. Système d'implant (1) selon l'une quelconque des revendications précédentes dépendantes de la revendication 3, dans lequel le second composant (2) comprend l'interface d'implant apicale et se divise en au moins deux, en particulier deux, interfaces de superstructure coronaires.

17. Système d'implant (1) selon l'une quelconque des revendications précédentes, dans lequel l'interface de superstructure coronaire (4) est agencée au niveau de l'extrémité coronaire d'une section de pilier formée d'un seul tenant pour fixer une superstructure dentaire, en particulier une restauration dentaire.
